# EUROPEAN PATENT SPECIFICATION

(11) **EP 4 616 289 B1**
(45) Date of publication and mention of the grant of the patent: **14.10.2026**
(21) Application number: 23805495.1
(22) Date of filing: 07.11.2023
(51) Int. Cl.: G06F 9/54

(54) **DATA TYPES AS REPRESENTATION OF DYNAMIC CAPABILITIES**
DATENTYPEN ALS DARSTELLUNG DYNAMISCHER FÄHIGKEITEN
TYPES DE DONNÉES EN TANT QUE REPRÉSENTATION DE CAPACITÉS DYNAMIQUES

(30) Priority: 08.11.2022 US 202263423653 P
(43) Date of publication of application: 17.09.2025
(73) Proprietor: Telefonaktiebolaget LM Ericsson (publ), 164 83 Stockholm (SE)
(72) Inventor: LIND, Patric, 224 74 Lund (SE); VIDYADHAR, Nallabothula, Athlone County Westmeath (IE); POWER, John, Athlone County Westmeath (IE); HANEEF, Mohamed Ibrahim, Athlone County Westmeath (IE)
(74) Representative: Ericsson
(86) International application number: PCT/EP2023/081059
(87) International publication number: WO 2024/100075

(56) References cited:
- ANONYMOUS: "On-Premises Schema Registry Tutorial | Confluent Documentation", 3 October 2022 (2022-10-03), XP093126065, Retrieved from the Internet <URL:https://web.archive.org/web/20221003173934/https://docs.confluent.io/platform/current/schema-registry/schema_registry_onprem_tutorial.html#centralized-schema-management> [retrieved on 20240131]
- ANONYMOUS: "Kafka Producer | Confluent Documentation", 1 November 2022 (2022-11-01), XP093126063, Retrieved from the Internet <URL:https://web.archive.org/web/20221101052139/https://docs.confluent.io/platform/current/clients/producer.html#example-code> [retrieved on 20240131]

## Description

### TECHNICAL FIELD

The present disclosure relates to data communication, and in particular, to data types as representation of dynamic capabilities, e.g. of a system.

### BACKGROUND

The open radio access network (O-RAN) Alliance developed and is developing O-RAN specifications and standards for mobile operators, vendors, and institutions. The O-RAN R1 interface specification describes that a Data Producer registers, as part of a data management and exposure (DME) service, with the DME services Producer, a data type for which it can produce data. An R1 interface may refer to an open logical interface. A Data Consumer can discover, with the DME services Producer, the available data types and further make a request or subscribe to the data for a specific data type.

The data types may be schema-based models of how data of a specific type is requested and delivered. Data Producers and the Data Consumers can be installable applications (e.g., referred to as rApps), and hence, the system capabilities for producing and using data may be dynamic. However, there may be more than one Data Producer registered for each data type, and the Data Consumer may not be aware of which of the Data Producers produced data, e.g., based on a request or subscribe for data of the type. In addition, other interfaces such as O-RAN A1 interfaces (i.e., interface configurable for discovery, request and delivery of enrichment information) may be used. However, the applications that produce and/or consume data may reside in different functions that communicate via the A1 interface.

Further, the ability of a Data Producer at a given time to produce data for a data type for which the Data Producer has registered may depend on dynamic aspects such as e.g., capacity and availability of input data it is dependent on. The application(s) may utilize machine learning (ML) models where update or re-training are performed before becoming available for producing data. In other words, the Data Producer may become unavailable for producing data when other steps are being performed. In addition, the Data Consumer may not be notified and/or aware of the unavailability of the Data Producer. Background art is represented by document D1: Anonymous, "On-Premises Schema Registry Tutorial | Confluent Documentation", 3 October 2022.

### SUMMARY

Some embodiments advantageously provide methods, systems, and apparatuses for determining data types as representation of dynamic capabilities, e.g., capabilities of a systems including availability of data types by a producer node.

According to one aspect, a method in a producer node configured to communicate with a management node and a consumer node is described. The method is described in claim 1.

In some embodiments, the first request further includes one or more of a data type identifier, data type information associated with a data job schema, a job status schema, a job constraints schema, and a job results schema, metadata related to the data type, and data job constraints information.

In some other embodiments, the method further includes transmitting a second request. The second request requests the management node to update or remove the registration of the data type based on one or both of a state transition of the data type state and another data type state of the data type.

In some embodiments, the method further includes determining the state transition has occurred based on a change of the data type state to the other data type state.

In some other embodiments, the data type state includes one of available, busy, disabled, shutting down, and locked.

In some embodiments, when the data type state includes available, the data type state indicates one or more of the data type is available for use, the data type is discoverable, and data requests are accepted.

In some other embodiments, when the data type state includes busy, the data type state indicates one or more of the data type is available for use, there is no spare capacity, data requests are accepted, and new jobs are idle until there is spare capacity.

In some embodiments, when the data type state includes disabled, the data type state indicates one or more of the data type is not available for use, existing jobs are not enabled, and data requests are not accepted.

In some other embodiments, when the data type state includes shutting down, the data type state indicates one or more of the data type is not available for use, existing jobs are enabled, and data requests are not accepted.

In some embodiments, when the data type includes locked, the data type sate indicates one or more of the data type is not available for use, existing jobs are idle, and data requests are not accepted.

According to another aspect, a producer node configured to communicate with a management node and a consumer node is described. The producer node is described in claim 4.

In some embodiments, the first request further includes one or more of a data type identifier, data type information associated with a data job schema, a job status schema, a job constraints schema, and a job results schema, metadata related to the data type, and data job constraints information.

In some other embodiments, the producer node is further configured to transmit a second request. The second request requests the management node to update or remove the registration of the data type based on one or both of a state transition of the data type state and another data type state of the data type.

In some embodiments, the producer node is further configured to determine the state transition has occurred based on a change of the data type state to the other data type state.

In some other embodiments, the data type state includes one of available, busy, disabled, shutting down, and locked.

In some embodiments, when the data type state includes available, the data type state indicates one or more of the data type is available for use, the data type is discoverable, and data requests are accepted.

In some other embodiments, when the data type state includes busy, the data type state indicates one or more of the data type is available for use, there is no spare capacity, data requests are accepted, and new jobs are idle until there is spare capacity.

In some embodiments, when the data type state includes disabled, the data type state indicates one or more of the data type is not available for use, existing jobs are not enabled, and data requests are not accepted.

In some other embodiments, when the data type state includes shutting down, the data type state indicates one or more of the data type is not available for use, existing jobs are enabled, and data requests are not accepted.

In some embodiments, when the data type includes locked, the data type sate indicates one or more of the data type is not available for use, existing jobs are idle, and data requests are not accepted.

According to one aspect, a method in a management node configured to communicate with a producer node and a consumer node is described. The method is described in claim 5.

In some embodiments, the method further includes receiving a first request from the producer node. The first request requests the management node to register the data type and includes the data type state.

In some other embodiments, the first request further includes one or more of a data type identifier, data type information associated with a data job schema, a job status schema, a job constraints schema, and a job results schema, metadata related to the data type, and data job constraints information.

In some embodiments, the method further includes one or both of: (A) receiving a second request from the producer node, where the second request requests the management node to update or remove the registration of the data type based on one or both of a state transition of the data type state and another data type state of the data type; and (B) in response to the second request, updating or removing the registration of the data type.

In some other embodiments, the data type state includes one of available, busy, disabled, shutting down, and locked.

In some embodiments, the method further includes receiving a third request from the consumer node. The third request is a subscription request to make at least the data type state available to the consumer node.

In some other embodiments, the method further includes receiving, from the consumer node, a fourth request for a data type identifier. The fourth request includes filtering criteria associated with the data type. The method also includes matching the filtering criteria to registered metadata associated with the data type and transmitting a first response to the consumer node, where the first response includes the data type identifier and at least a subset of the registered metadata.

In some embodiments, the method further includes receiving, from the consumer node, a fifth request for information associated with the data type. The fifth request includes the data type identifier. The method also includes transmitting, to the consumer node, a second response including the information. The information is determined based on a consolidation of information registered for the data type, and the data type is associated with at least one other data producer node.

In some other embodiments, the method further includes receiving, from the consumer node, a sixth request for the data type state, where the sixth request includes the data type identifier, in response to receiving the sixth request, determining an object usable by the consumer node to validate the object against an open application programming interface schema, and transmitting, to the consumer node, a third response including the object.

According to another aspect, a management node configured to communicate with a producer node and a consumer node is described. The management node is described in claim 8.

In some embodiments, the management node is further configured to receive a first request from the producer node. The first request requests the management node to register the data type and includes the data type state.

In some other embodiments, the first request further includes one or more of a data type identifier, data type information associated with a data job schema, a job status schema, a job constraints schema, and a job results schema, metadata related to the data type, and data job constraints information.

In some embodiments, the management node is further configured to one or both of: (A) receive a second request from the producer node, where the second request requests the management node to update or remove the registration of the data type based on one or both of a state transition of the data type state and another data type state of the data type; and (B) in response to the second request, update or remove the registration of the data type.

In some other embodiments, the data type state includes one of available, busy, disabled, shutting down, and locked.

In some embodiments, the management node is further configured to receive a third request from the consumer node. The third request is a subscription request to make at least the data type state available to the consumer node.

In some other embodiments, the management node is further configured to receive, from the consumer node, a fourth request for a data type identifier. The fourth request includes filtering criteria associated with the data type. The management node is also configured to match the filtering criteria to registered metadata associated with the data type and transmit a first response to the consumer node. The first response includes the data type identifier and at least a subset of the registered metadata.

In some embodiments, the management node is further configured to receive, from the consumer node, a fifth request for information associated with the data type. The fifth request includes the data type identifier. The management node is further configured to transmit, to the consumer node, a second response including the information. The information is determined based on a consolidation of information registered for the data type. The data type is associated with at least one other data producer node.

In some other embodiments, the management node is further configured to receive, from the consumer node, a sixth request for the data type state. The sixth request includes the data type identifier. The management node is further configured to, in response to receiving the sixth request, determine an object usable by the consumer node to validate the object against an open application programming interface schema. A third response including the object is transmitted to the consumer node.

According to one aspect, a method implemented in a consumer node configured to communicate with a producer node and a management node is described. The method is described in claim 9.

In some embodiments, the data type is registered at the management node and is further associated with one or more of a data type identifier, data type information associated with a data job schema, a job status schema, a job constraints schema, and a job results schema, metadata related to the data type, and data job constraints information.

In some other embodiments, the data type state includes one of available, busy, disabled, shutting down, and locked.

In some embodiments, the method further includes transmitting a first request to the consumer node. The first request is a subscription request to make at least the data type state available to the consumer node, and the data type state is obtained when the data type state is made available by the management node.

In some other embodiments, the method further includes transmitting, to the management node, a second request for a data type identifier, where the second request includes filtering criteria associated with the data type, and receiving a first response from the management node. The first response includes the data type identifier and at least a subset of registered metadata.

In some embodiments, the method further includes transmitting, to the management node, a third request for information associated with the data type. The third request includes the data type identifier. The method also includes receiving, from the management node, a second response including the information associated with the data type. The information is determined based on a consolidation of information registered for the data type. The data type is associated with at least one other data producer node.

In some other embodiments, the method further includes in response to the second response, validating data associated with a job constraints object against a job constraints schema.

In some embodiments, the method further includes transmitting, to the management node, a fourth request for the data type state, where the fourth request includes the data type identifier. The method also includes receiving, from the management node, a third response including an object usable by the consumer node to validate the object against an open application programming interface schema.

In some other embodiments, the method further includes validating the object against an open application programming interface schema.

In some embodiments, performing the one or more actions includes requesting or avoiding the request of data of the data type from the producer node based on the data type state.

According to another aspect, a consumer node configured to communicate with a producer node and a management node. The consumer node is configured to obtain, from the management node, at least a data type state corresponding to a data type. The data type is associated with data that the producer node is configurable to produce to the consumer node, and the data type state indicates a capability of the producer node to produce the data of the data type. The consumer node is further configured to perform one or more actions based at least on the obtained data type state.

In some embodiments, the data type is registered at the management node and is further associated with one or more of a data type identifier, data type information associated with a data job schema, a job status schema, a job constraints schema, and a job results schema, metadata related to the data type, and data job constraints information.

In some other embodiments, the data type state includes one of available, busy, disabled, shutting down, and locked.

In some embodiments, the consumer node is further configured to:
transmit a first request to the consumer node, where the first request is a subscription request to make at least the data type state available to the consumer node. The data type state is obtained when the data type state is made available by the management node.

In some other embodiments, the consumer node is further configured to transmit, to the management node, a second request for a data type identifier. The second request includes filtering criteria associated with the data type. A first response is received from the management node. The first response includes the data type identifier and at least a subset of registered metadata.

In some embodiments, the consumer node is further configured to transmit, to the management node, a third request for information associated with the data type, where the third request includes the data type identifier, and receive, from the management node, a second response including the information associated with the data type. The information is determined based on a consolidation of information registered for the data type, and the data type is associated with at least one other data producer node.

In some other embodiments, the consumer node is further configured to, in response to the second response, validate data associated with a job constraints object against a job constraints schema.

In some embodiments, the consumer node is further configured to transmit, to the management node, a fourth request for the data type state, where the fourth request includes the data type identifier, and receive, from the management node, a third response including an object usable by the consumer node to validate the object against an open application programming interface schema.

In some other embodiments, the consumer node is further configured to validate the object against an open application programming interface schema.

In some embodiments, performing the one or more actions includes requesting or avoiding the request of data of the data type from the producer node based on the data type state.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a schematic diagram of an example network architecture illustrating a system according to the principles in the present disclosure;
FIG. 2 is a block diagram of example nodes according to some embodiments of the present disclosure;
FIG. 3 is a flowchart of an example process in a producer node according to some embodiments of the present disclosure;
FIG. 4 is a flowchart of an example process in a management node according to some embodiments of the present disclosure;
FIG. 5 is a flowchart of an example process in a consumer node according to some embodiments of the present disclosure;
FIG. 6 is a flowchart of an example process in a producer node according to some embodiments of the present disclosure;
FIG. 7 is a flowchart of an example process in a management node according to some embodiments of the present disclosure;
FIG. 8 is a flowchart of an example process in a consumer node according to some embodiments of the present disclosure;
FIG. 9 is an example system overview according to some embodiments of the present disclosure;
FIG. 10 is an example state diagram according to some embodiments of the present disclosure; and
FIG. 11 is a diagram associated with an example data registration process according to some embodiments of the present disclosure;
FIG. 12 is a diagram associated with an example data type discovery process, and data type status and registration update process according to some embodiments of the present disclosure;
FIG. 13 shows example data type states and transitions according to some embodiments of the present disclosure;
FIG. 14 shows other example data type states and transitions according to some embodiments of the present disclosure;
FIG. 15 shows an example model for type management according to some embodiments of the present disclosure;
FIG. 16 shows example type life cycle management (LCM) aspects according to some embodiments of the present disclosure;
FIG. 17 shows an example model for job management according to some embodiments of the present disclosure;
FIG. 18 shows example job LCM aspects management according to some embodiments of the present disclosure;
FIG. 19 shows example dependencies between type and job operational states according to some embodiments of the present disclosure;
FIG. 20 shows portions of an example combination of a model for type management according to some embodiments of the present disclosure;
FIG. 21 shows other portions of the example combination of the model for type management according to some embodiments of the present disclosure;
FIG. 22 shows yet other portions of the example combination of the model for type management according to some embodiments of the present disclosure; and
FIG. 23 shows a type state transition diagram from a job management perspective according to some embodiments of the present disclosure.

### DETAILED DESCRIPTION

Before describing in detail example embodiments, it is noted that the embodiments reside primarily in combinations of apparatus components and processing steps related to determining data types as representation of dynamic capabilities. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "node" (or "network node") used herein can be any kind of network node which may be comprised in a network. The node may further comprise any of a producer node (e.g., a data producer node, service producer node), a management node, a management and/or exposure node (e.g., data management and exposure (DME) function), a DME Service Producer, a consumer node (e.g., a data consumer node), a server, a client, etc. The network may refer to any network such as an O-RAN network, a Third Generation Partnership Project (3GPP) network, etc.

In some embodiments, a producer node may be configured to communicate with a management node over a control plane. In some other embodiments, the producer node may be configured to communicate with a consumer node over a data plane.

Further, in the present disclosure, the term "rApp" is used, which may refer to an application (e.g., software application) in a non-real time (Non-RT) radio access network (RAN) intelligent controller (RIC) that may be designed and/or configured to consume and/or produce services produced/consumed by a Non-RT RIC framework and/or other rApps.

In some embodiments, the term node (e.g., one or more nodes described in one or more of the embodiments of the present disclosure such as any enumerated embodiment) comprises (e.g., covers) virtual/logical as well as physical nodes. In a nonlimiting example, a virtual/logical node may be and/or comprise an rApp. In one or more embodiments (e.g., preferred embodiments), a producer node and/or the consumer node are each (and/or each may comprise) an rApp.

The 3GPP has developed and is developing standards for Fourth Generation (4G) (also referred to as Long Term Evolution (LTE)), Fifth Generation (5G) (also referred to as New Radio (NR)), and Sixth Generation (6G) wireless communication systems. Such systems provide, among other features, broadband communication between network nodes, such as base stations, and mobile wireless devices (WD), as well as communication between network nodes and between WDs.

In some embodiments, the node may comprise a base station (BS), radio base station, base transceiver station (BTS), base station controller (BSC), radio network controller (RNC), g Node B (gNB), evolved Node B (eNB or eNodeB), Node B, multistandard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3^{rd} party node, a node external to the current network), nodes in distributed antenna system (DAS), a spectrum access system (SAS) node, an element management system (EMS), etc. The node may also comprise test equipment and/or a radio node. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

In some embodiments, the term "node" may refer to a WD, a UE, or a radio network node.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Note that although terminology from one particular system, such as, for example, O-RAN, 3GPP LTE and/or New Radio (NR), may be used in this disclosure, this should not be seen as limiting the scope of the disclosure to only the aforementioned system. Other networks and/or systems, including without limitation any networks configured for data communication (and/or transmission/reception of control signals), Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by any node (e.g., consumer node, management node, producer node, network node, and/or wireless device) and may be distributed over a plurality of nodes. In other words, it is contemplated that the functions of the nodes described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

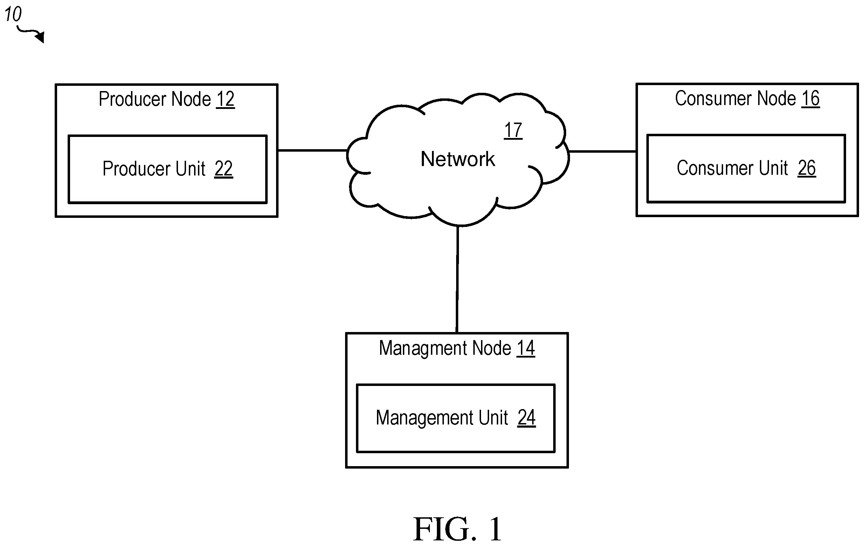

Referring to the drawing figures, in which like elements are referred to by like reference numerals, there is shown in FIG. 1 a schematic diagram of a system 10, according to an embodiment. System 10 may be an O-RAN system or any other system such as a 3GPP system. Further, system 10 may include one or more of the following: producer node 12, management node 14, and consumer node 16 in communication via network 17. Any of the producer node 12, management node 14, and consumer node 16 may be configured to communicate with at least one of the other nodes.

Producer node 12 is configured to include a producer unit 22 which is configured to perform any step and/or task and/or process and/or method and/or feature described in the present disclosure, e.g., determine data type information and/or register the data type information with another node.

Management node 14 is configured to include a management unit 24 which is configured to perform any step and/or task and/or process and/or method and/or feature described in the present disclosure, e.g., register data type information and/or expose the data type information and/or make the data type information discoverable.

Consumer node 16 is configured to include a consumer unit 26 which is configured to perform any step and/or task and/or process and/or method and/or feature described in the present disclosure, e.g., obtain data type information and/or perform at least one action based on the data type information.

In some embodiments, any of producer node 12, management node 14, and consumer node 16 is one or more Open-RAN (ORAN) network nodes. An ORAN network node is a node in system 10 that supports an ORAN specification (e.g., a specification published by the O-RAN Alliance, or any similar organization) and may operate alone or together with other nodes to implement one or more functionalities of any node in system 10, including one or more access network nodes and/or core network nodes. Examples of an ORAN network node include an open radio unit (O-RU), an open distributed unit (O-DU), an open central unit (O-CU), including an O-CU control plane (O-CU-CP) or an O-CU user plane (O-CU-UP), a RAN intelligent controller (near-real time or non-real time) hosting software or software plug-ins, such as a near-real time control application (e.g., xApp) or a non-real time control application (e.g., rApp), or any combination thereof (the adjective "open" designating support of an ORAN specification). The network node may support a specification by, for example, supporting an interface defined by the ORAN specification, such as an A1, F1, W1, E1, E2, X2, Xn interface, an open fronthaul user plane interface, or an open fronthaul management plane interface. Moreover, an ORAN access node may be a logical node in a physical node. Furthermore, an ORAN network node may be implemented in a virtualization environment in which one or more network functions are virtualized. For example, the virtualization environment may include an O-Cloud computing platform orchestrated by a Service Management and Orchestration Framework via an O-2 interface defined by the O-RAN Alliance or comparable technologies. The access network nodes facilitate direct or indirect connection of user equipment (UE), such as by connecting UEs to the core network (e.g., network 17) over one or more wireless connections.

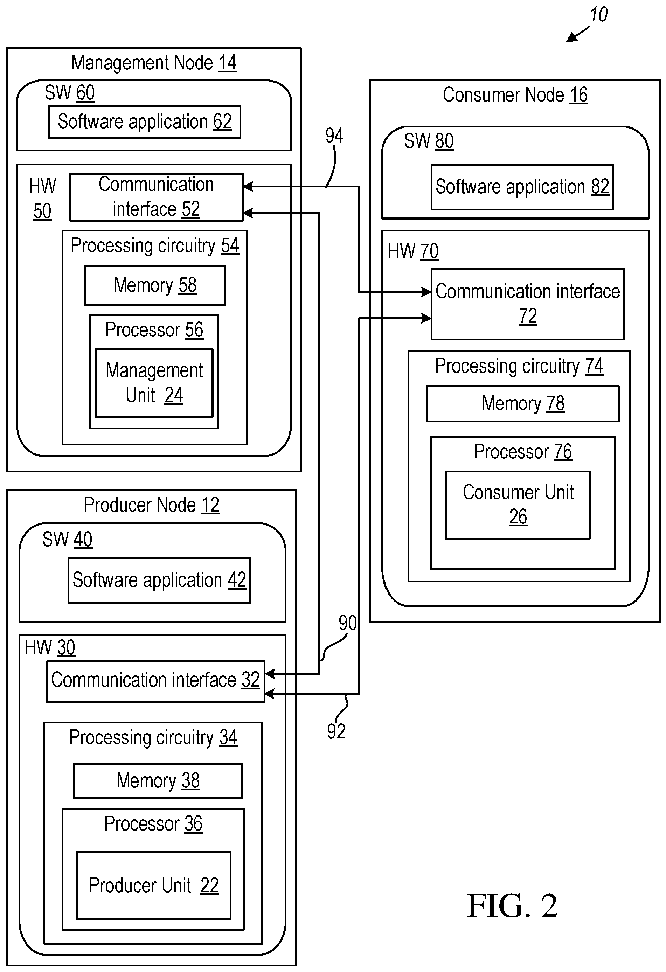

Example implementations, in accordance with an embodiment, of the producer node 12, consumer node 16 and management node 14 discussed in the preceding paragraphs will now be described with reference to FIG. 2. In a system 10, the producer node 12 may have hardware 30 that may include a communication interface 32 configured to set up and maintain a connection 90, 92 with management node 14 and consumer node 16, respectively. The communication interface 32 may be formed as or may include, for example, one or more transmitters (e.g., RF transmitters), one or more receivers (e.g., RF receivers), and/or one or more transceivers (e.g., RF transceivers).

The hardware 30 of the producer node 12 further includes processing circuitry 34. The processing circuitry 34 may include a processor 36 and memory 38. In particular, in addition to or instead of a processor, such as a central processing unit, and memory, the processing circuitry 34 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 36 may be configured to access (e.g., write to and/or read from) memory 38, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the producer node 12 may further comprise software 40, which is stored in, for example, memory 38 at the producer node 12, or stored in external memory (e.g., database, storage array, network storage device, etc.) accessible by the producer node 12. The software 40 may be executable by the processing circuitry 34. The software 40 may include a software application 42. The software application 42 may be operable to provide one or more functions, e.g., to provide a service to a human or non-human user via the producer node 12 which may be with the support of the management node 14 and/or consumer node 16. In the management node 14, an executing software application 62 may communicate with the executing software application 42 via the connection 92 terminating at the producer node 12 and the management node 14. In providing the service to a user, the software application 42 may receive request data from the software application 62 and provide user data in response to the request data. The connection 90 may transfer both the request data and the user data. The software application 42 may interact with the user to generate the user data that it provides. In some embodiments, software application 42 comprises an application associated with O-RAN systems such as rApp.

The processing circuitry 34 may be configured to control any of the methods and/or processes described herein and/or to cause such methods, and/or processes to be performed, e.g., by producer node 12. The processor 36 corresponds to one or more processors 36 for performing producer node 12 functions described herein. The producer node 12 includes memory 38 that is configured to store data, programmatic software code and/or other information described herein. In some embodiments, the software 40 and/or the software application 42 may include instructions that, when executed by the processor 36 and/or processing circuitry 34, causes the processor 36 and/or processing circuitry 34 to perform the processes described herein with respect to producer node 12. For example, the processing circuitry 34 of the producer node may include producer unit 22 which is configured to perform any step and/or task and/or process and/or method and/or feature described in the present disclosure, e.g., determine data type information and/or register the data type information with another node.

Management node 14 comprises hardware (HW) 50 including a communication interface 52 configured to set up and maintain a wired or wireless connection with an interface of a different communication device of the system 10. The management node 14 further comprises processing circuitry 54, which may have storage and/or processing capabilities. The processing circuitry 54 may include a processor 56 and memory 58. In particular, in addition to or instead of a processor, such as a central processing unit, and memory, the processing circuitry 54 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 56 may be configured to access (e.g., write to and/or read from) memory 58, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 54 may be configured to control any of the methods and/or processes described herein and/or to cause such methods, and/or processes to be performed, e.g., by management node 14. Processor 56 corresponds to one or more processors 56 for performing management node 14 functions described herein. The management node 14 includes memory 58 that is configured to store data, programmatic software code and/or other information described herein. Management node 14 may further include software 60. Software 60 may include a software application 62. In some embodiments. In some embodiments, the software 60 and/or the software application 62 may include instructions that, when executed by the processor 56 and/or processing circuitry 54, causes the processor 56 and/or processing circuitry 54 to perform the processes described herein with respect to management node 14. The instructions may be software associated with the management node 14.

The software 60 may be executable by the processing circuitry 54. The software application 62 may be operable to provide a service to a user such as a remote user, e.g., as a producer node 12 connecting via a connection 90 terminating at the producer node 12 and the management node 14. In providing the service to the remote user, the software application 62 may provide user data which is transmitted using the connection 90. The "user data" may be data and information described herein as implementing the described functionality. In one embodiment, the management node 14 may be configured for providing control and functionality to a service provider and may be operated by the service provider or on behalf of the service provider. The processing circuitry 54 of the management node 14 may enable the management node 14 to manage one or more functions associated with data communication. The processing circuitry 54 of the management node 14 may include a management unit 24 which is configured to perform any step and/or task and/or process and/or method and/or feature described in the present disclosure, e.g., register data type information and expose the data type information and/or make the data type information discoverable.

The system 10 further includes a consumer node 16 provided in a system 10 and including hardware 70 enabling it to communicate with the management node 14 and with the producer node 12. The hardware 70 may include a communication interface 72 for setting up and maintaining a wired or wireless connection with an interface of a different communication device of the system 10, such as with producer node 12 via connection 92 and/or with management node 14 via connection 94. The communication interface 72 may be formed as or may include, for example, one or more transmitters (e.g., RF transmitters), one or more receivers (e.g., RF receivers), and/or one or more transceivers (e.g., RF transceivers).

In the embodiment shown, the hardware 70 of the consumer node 16 further includes processing circuitry 74. The processing circuitry 74 may include a processor 76 and a memory 78. In particular, in addition to or instead of a processor, such as a central processing unit, and memory, the processing circuitry 74 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 76 may be configured to access (e.g., write to and/or read from) the memory 78, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the consumer node 16 further has software 80 stored internally in, for example, memory 78, or stored in external memory (e.g., database, storage array, network storage device, etc.) accessible by the consumer node 16 via an external connection. The software 80 may include a software application 82. In some embodiments, the software application 82 may be operable to provide a service to a human or non-human user via the consumer node 16, e.g., with the support of the management node 14 and/or producer node 12. The software 80 may be executable by the processing circuitry 74. The processing circuitry 74 may be configured to control any of the methods and/or processes described herein and/or to cause such methods, and/or processes to be performed, e.g., by consumer node 16. Processor 76 corresponds to one or more processors 76 for performing consumer node 16 functions described herein. The memory 78 is configured to store data, programmatic software code and/or other information described herein. In some embodiments, the software 80 may include instructions that, when executed by the processor 76 and/or processing circuitry 74, causes the processor 76 and/or processing circuitry 74 to perform the processes described herein with respect to consumer node 16. For example, processing circuitry 74 of the consumer node 16 may include a consumer unit 26 which is configured to perform any step and/or task and/or process and/or method and/or feature described in the present disclosure, e.g., obtain data type information and/or perform at least one action based on the data type information. In some embodiments, software application 42 comprises an application associated with O-RAN systems such as rApp.

In some embodiments, the inner workings of the consumer node 16, producer node 12, and management node 14 may be as shown in FIG. 2 and independently, the surrounding network topology may be that of FIG. 1.

In FIG. 2, the connections 90, 92, 94 have been drawn abstractly to illustrate the communication between the nodes, without explicit reference to any intermediary devices and the precise routing of messages via these devices. Network infrastructure may determine the routing, which may be configured to hide from the producer node 12 and/or from the management node 14 and/or consumer node 16. While the any of connections 90, 92, 94 is active, the network infrastructure may further take decisions by which it dynamically changes the routing (e.g., on the basis of load balancing consideration or reconfiguration of the network).

One or more of the various embodiments improve the performance of data communication provided by the producer node 12 (and/or management node 14 and/or consumer node 16) using any of the connections 90, 92, 94. In some embodiments, connections 90, 92 and/or 94 may be made via network 17 (not shown in FIG. 2). More precisely, the teachings of some of these embodiments may improve the data rate, latency, and/or power consumption and thereby provide benefits such as reduced user waiting time, better responsiveness, etc.

Although FIGS. 1 and 2 show various "units" such as producer unit 22, management unit 24, and consumer unit 26 as being within a respective processor, it is contemplated that these units may be implemented such that a portion of the unit is stored in a corresponding memory within the processing circuitry. In other words, the units may be implemented in hardware or in a combination of hardware and software within the processing circuitry.

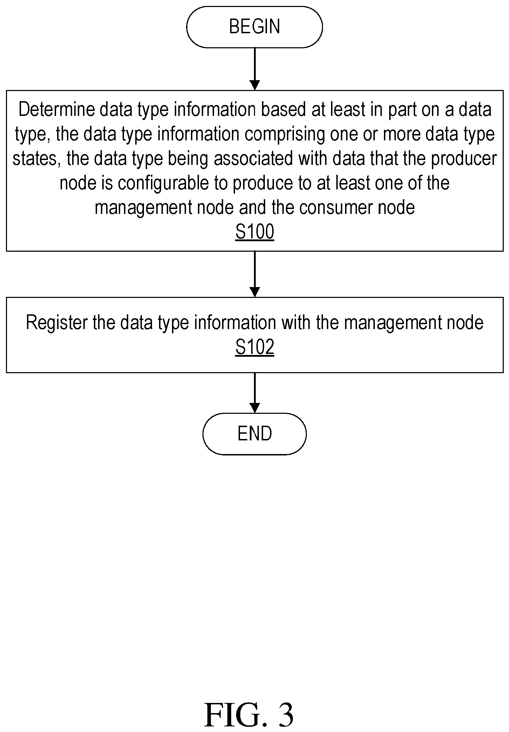

FIG. 3 is a flowchart of an example process in a producer node 12. One or more blocks described herein may be performed by one or more elements of producer node 12 such as by one or more of processing circuitry 34 (including the producer unit 22), processor 36, communication interface 32. Producer node 12 is configured to (Block S100) determine data type information based at least in part on a data type. The data type information comprises one or more data type states, and the data type is associated with data that the producer node 12 is configurable to produce to at least one of the management node 14 and the consumer node 16. Producer node 12 is further configured to register (Block S102) the data type information with the management node 14.

In some embodiments, the data type information further includes at least one of a data type definition; metadata related to the data type; and one or more producer constraints.

In some other embodiments, the one or more data type states include available, busy, disabled, shutting down, and locked.

In some embodiments, the method further includes at least one of one of updating and removing the registration of the data type information with the management node 14 based at least on the one or more data type states; and causing transmission of a notification to the consumer node 16 indicating at least one of the registration, the update, the removal of the registration of the data type information, and a data type information change.

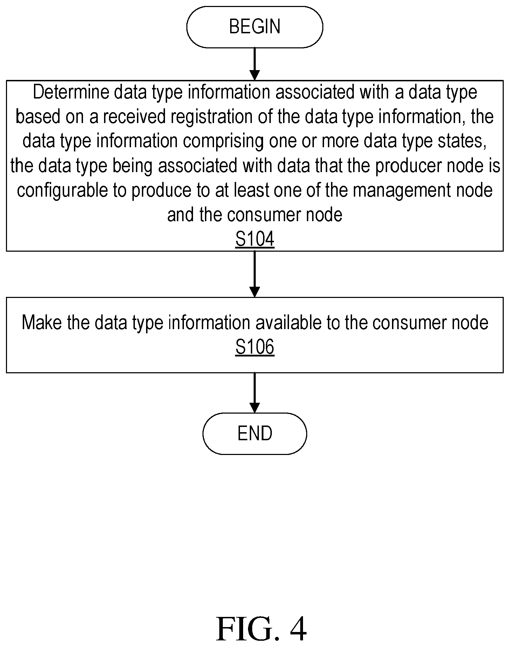

FIG. 4 is a flowchart of an example process in a management node 14. One or more blocks described herein may be performed by one or more elements of management node 14 such as by one or more of processing circuitry 54 (including the management unit 24), processor 56, communication interface 52. Management node 14 is configured to determine (Block S104) data type information associated with a data type based on a received registration of the data type information. The data type information comprises one or more data type states, and the data type is associated with data that the producer node 12 is configurable to produce to at least one of the management node 14 and the consumer node 16. Management node 14 is further configured to make (Block S106) the data type information available to the consumer node 16.

In some embodiments, the data type information further includes at least one of a data type definition; metadata related to the data type; and one or more producer constraints.

In some other embodiments, the one or more data type states include available, busy, disabled, shutting down, and locked.

In some embodiments, the method further includes at least one of one of updating and removing the registration of the data type information with the management node 14 based at least on the one or more data type states; and causing transmission of a notification to the consumer node 16 indicating at least one of the registration, the update, the removal of the registration of the data type information, and a data type information change.

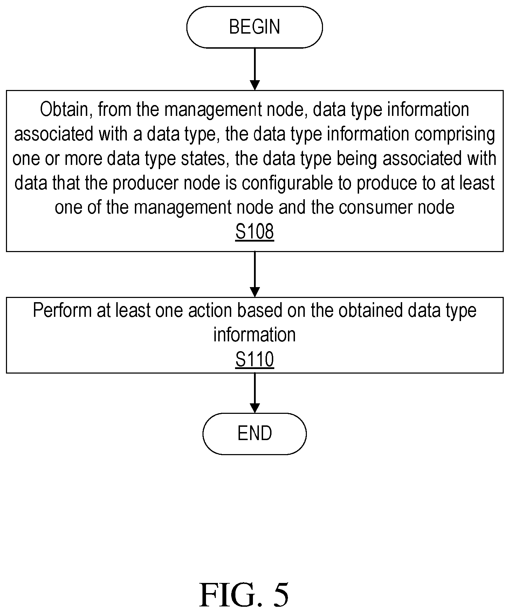

FIG. 5 is a flowchart of an example process in a consumer node 16. One or more blocks described herein may be performed by one or more elements of consumer node 16 such as by one or more of processing circuitry 74 (including the consumer unit 26), processor 76, communication interface 72. Consumer node 16 is configured to obtain (Block S108), from the management node 14, data type information associated with a data type, where the data type information comprises one or more data type states, and the data type is associated with data that the producer node 12 is configurable to produce to at least one of the management node 14 and the consumer node 16; and perform (Block S110) at least one action based on the obtained data type information.

In some embodiments, the data type information further includes at least one of a data type definition; metadata related to the data type; and one or more producer constraints.

In some other embodiments, the one or more data type states include available, busy, disabled, shutting down, and locked.

In some embodiments, the method further includes at least one of receiving a notification indicating at least one of the registration, the update, the removal of the registration of the data type information, and a data type information change; and performing the at least one of more actions based on the received notification.

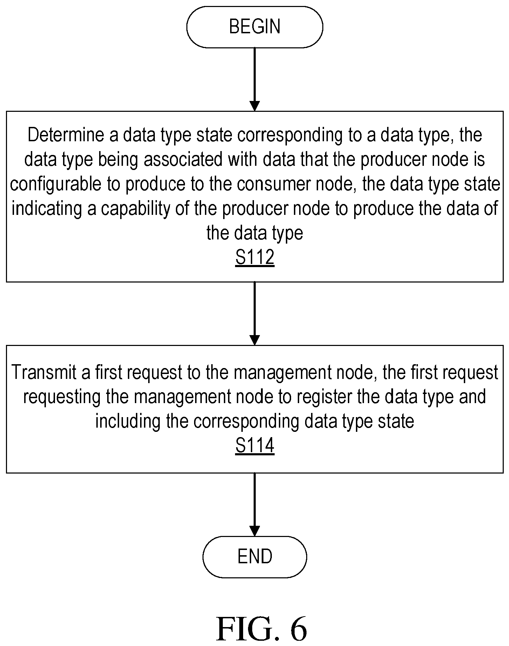

FIG. 6 is a flowchart of an example process in a producer node 12. One or more blocks described herein may be performed by one or more elements of producer node 12 such as by one or more of processing circuitry 34 (including the producer unit 22), processor 36, communication interface 32. Producer node 12 is configured to determine (Block S112) a data type state corresponding to a data type. The data type is associated with data that the producer node 12 is configurable to produce to the consumer node 16, and the data type state indicates a capability of the producer node 12 to produce the data of the data type. Producer node 12 is further configured to transmit (Block S114) a first request to the management node 14. The first request requests the management node 14 to register the data type and includes the corresponding data type state.

In some embodiments, the first request further includes one or more of a data type identifier, data type information associated with a data job schema, a job status schema, a job constraints schema, and a job results schema, metadata related to the data type, and data job constraints information.

In some other embodiments, the method further includes transmitting a second request. The second request requests the management node 14 to update or remove the registration of the data type based on one or both of a state transition of the data type state and another data type state of the data type.

In some embodiments, the method further includes determining the state transition 102 has occurred based on a change of the data type state to the other data type state.

In some other embodiments, the data type state includes one of available, busy, disabled, shutting down, and locked.

In some embodiments, when the data type state includes available, the data type state indicates one or more of the data type is available for use, the data type is discoverable, and data requests are accepted.

In some other embodiments, when the data type state includes busy, the data type state indicates one or more of the data type is available for use, there is no spare capacity, data requests are accepted, and new jobs are idle until there is spare capacity.

In some embodiments, when the data type state includes disabled, the data type state indicates one or more of the data type is not available for use, existing jobs are not enabled, and data requests are not accepted.

In some other embodiments, when the data type state includes shutting down, the data type state indicates one or more of the data type is not available for use, existing jobs are enabled, and data requests are not accepted.

In some embodiments, when the data type includes locked, the data type sate indicates one or more of the data type is not available for use, existing jobs are idle, and data requests are not accepted.

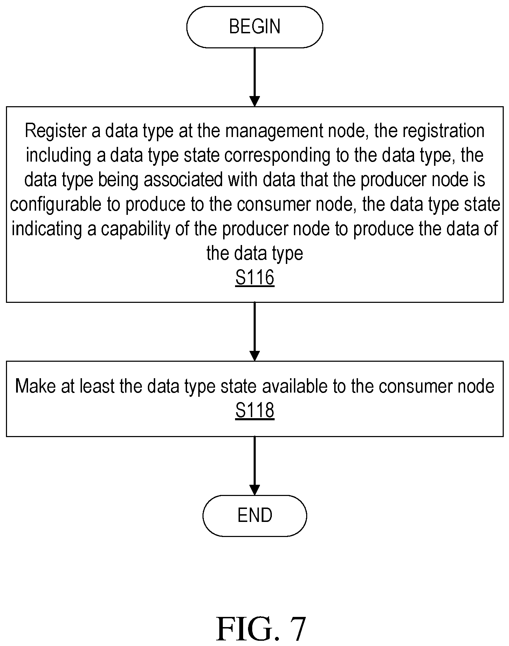

FIG. 7 is a flowchart of an example process in a management node 14. One or more blocks described herein may be performed by one or more elements of management node 14 such as by one or more of processing circuitry 54 (including the management unit 24), processor 56, communication interface 52. Management node 14 is configured to register (Block S116) a data type at the management node 14. The registration includes a data type state corresponding to the data type. The data type is associated with data that the producer node 12 is configurable to produce to the consumer node 16, and the data type state indicates a capability of the producer node 12 to produce the data of the data type. Management node 14 is further configured to make (Block S 118) at least the data type state available to the consumer node.

In some embodiments, the method further includes receiving a first request from the producer node 12. The first request requests the management node 14 to register the data type and includes the data type state.

In some other embodiments, the first request further includes one or more of a data type identifier, data type information associated with a data job schema, a job status schema, a job constraints schema, and a job results schema, metadata related to the data type, and data job constraints information.

In some embodiments, the method further includes one or both of: (A) receiving a second request from the producer node 12, where the second request requests the management node 14 to update or remove the registration of the data type based on one or both of a state transition of the data type state and another data type state of the data type; and (B) in response to the second request, updating or removing the registration of the data type.

In some other embodiments, the data type state includes one of available, busy, disabled, shutting down, and locked.

In some embodiments, the method further includes receiving a third request from the consumer node. The third request is a subscription request to make at least the data type state available to the consumer node.

In some other embodiments, the method further includes receiving, from the consumer node 16, a fourth request for a data type identifier. The fourth request includes filtering criteria associated with the data type. The method also includes matching the filtering criteria to registered metadata associated with the data type and transmitting a first response to the consumer node 16, where the first response includes the data type identifier and at least a subset of the registered metadata.

In some embodiments, the method further includes receiving, from the consumer node 16, a fifth request for information associated with the data type. The fifth request includes the data type identifier. The method also includes transmitting, to the consumer node 16, a second response including the information. The information is determined based on a consolidation of information registered for the data type, and the data type is associated with at least one other data producer node.

In some other embodiments, the method further includes receiving, from the consumer node 16, a sixth request for the data type state, where the sixth request includes the data type identifier, in response to receiving the sixth request, determining an object usable by the consumer node 16 to validate the object against an open application programming interface schema, and transmitting, to the consumer node 16, a third response including the object.

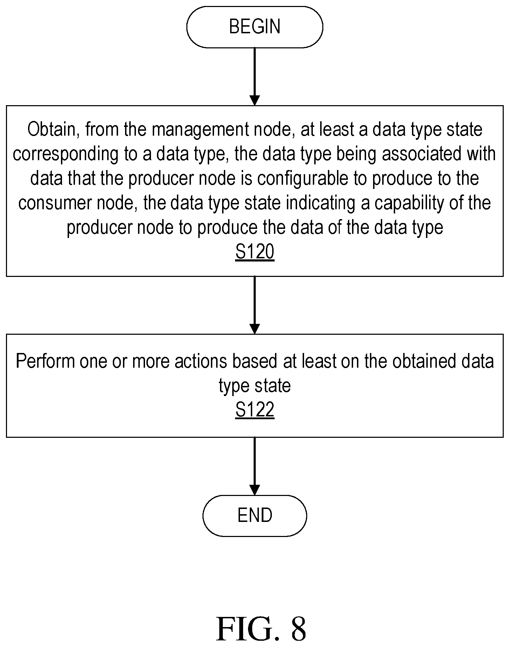

FIG. 8 is a flowchart of an example process in a consumer node 16. One or more blocks described herein may be performed by one or more elements of consumer node 16 such as by one or more of processing circuitry 74 (including the consumer unit 26), processor 76, communication interface 72. Consumer node 16 is configured to obtain (Block S 120), from the management node 14, at least a data type state corresponding to a data type. The data type is associated with data that the producer node 12 is configurable to produce to the consumer node 16. The data type state indicates a capability of the producer node 12 to produce the data of the data type. Consumer node 16 is further configured to perform (Block S 122) one or more actions based at least on the obtained data type state.

In some embodiments, the data type is registered at the management node 14 and is further associated with one or more of a data type identifier, data type information associated with a data job schema, a job status schema, a job constraints schema, and a job results schema, metadata related to the data type, and data job constraints information.

In some other embodiments, the data type state includes one of available, busy, disabled, shutting down, and locked.

In some embodiments, the method further includes transmitting a first request to the management node 14. The first request is a subscription request to make at least the data type state available to the consumer node 16, and the data type state is obtained when the data type state is made available by the management node 14.

In some other embodiments, the method further includes transmitting, to the management node, a second request for a data type identifier, where the second request includes filtering criteria associated with the data type, and receiving a first response from the management node. The first response includes the data type identifier and at least a subset of registered metadata.

In some embodiments, the method further includes transmitting, to the management node 14, a third request for information associated with the data type. The third request includes the data type identifier. The method also includes receiving, from the management node 14, a second response including the information associated with the data type. The information is determined based on a consolidation of information registered for the data type. The data type is associated with at least one other data producer node.

In some other embodiments, the method further includes, in response to the second response, validating data associated with a job constraints object against a job constraints schema.

In some embodiments, the method further includes transmitting, to the management node, a fourth request for the data type state, where the fourth request includes the data type identifier. The method also includes receiving, from the management node 14, a third response including an object usable by the consumer node 16 to validate the object against an open application programming interface schema.

In some other embodiments, the method further includes validating the object against an open application programming interface schema.

In some embodiments, performing the one or more actions includes requesting or avoiding the request of data of the data type from the producer node based on the data type state.

Having described the general process flow of arrangements of the disclosure and having provided examples of hardware and software arrangements for implementing the processes and functions of the disclosure, the sections below provide details and examples of arrangements for determining data types as representation of dynamic capabilities.

The Data Producer as described herein may refer to producer node 12. Any one of the DME Service Producer and/or DME Producer and/or DME and/or DME function may refer to management node 14. The Data Consumer may refer to consumer node 16.

In some embodiments, one or more data type states (which may represent an ability of a system 10 to serve a Data Consumer with data for a data type) are determined. The data may be requested or subscribed to by the Data Consumer. In some other embodiments, state information, e.g., usable to guide the Data Consumer during its life cycle management, is determined. In some embodiments, the state information may be determined if a request or subscription has been initiated.

In some other embodiments, information associated with a data type may be determined and may include "data type is registered" and "data type is available." The information may comprise or be associated with or based on data type states.

In some embodiments, one or more data types may be used as a representation of dynamic capabilities of a system (e.g., the DME function or each Data Producer) to produce data and/or to define data type states that express to which extent the production resource is available for use.

In some other embodiments, data types may be considered as "managed resources," and a management model can be applied with the following definitions:
- A state diagram may describe the data type, i.e. representing the data production resource;
- States (e.g., Administrative, Operational and Usage in the management model) may be applied to a data type;
- A "user" of a resource in the management model corresponds to a "data job" which represents the instantiation of resources to handle one specific data request or subscription; and
- A data job may be described using the management model and may combine a state diagram.

Based on the data type states and relevant state transitions, messages such as R1 messages can be defined, which may allow a Data Consumer to query the state of a data type and/or be notified about changes in the state of a data type or about data types that are registered/deregistered.

With the data type states, the Data Consumer may determine (or have) information about whether a data type is available for use (e.g., if a request to subscribe will be accepted or not) and/or whether a data type is in a particular state. In other words, the information and/or state may indicate that existing data jobs are disabled or idle or that the data jobs should be deleted.

In some embodiments, a producer node 12 may register with the management node 14 the data type definition (schemas), metadata related to the data type, the data type state and/or its producer constraints. In some other embodiments, management node 14 may perform registration without a request from the producer node 12. In a nonlimiting example, management node 14 may obtain any of the data type definition (schemas), metadata related to the data type, the data type state and/or its producer constraints and register any of the data type definition (schemas), metadata related to the data type, the data type state and/or its producer constraints at the management node 14. In some embodiments, the term state may refer to a status. The data type definition and the producer constraints may be schema-based and/or specific for each data type. The metadata and the data type state may have a common format for all data types and may be defined as part of an R1 application programming interface (API). The producer node 12 may update its registration and/or delete it. In some other embodiments, the producer node 12 may update its registration (e.g., except for the data type definition).

In some other embodiments, the management node 14 may be configured to handle registrations made for the same data type and/or provide a consolidated view at least to the consumer nodes 16 regarding registered data types, their state, and constraints related to data production.

One or more embodiments enable separation of the control plane from the data plane (or user plane). After a data job is accepted, then data delivery may be made using a mechanism such as for the control plane.

In some embodiments, schema based data types are machine-readable and enable producer node 12 and consumer nodes 16 to deploy new data type definitions in run-time as is relevant e.g. in artificial intelligence (AI)/ML pipelines. A job schema enables the consumer node 16 to formulate a data job that corresponds to what the producer node 12 can produce and deliver, while the job result schema enables the consumer node 16 to interpret the data delivered as a result of the accepted data job.

Inclusion of a constraints schema in the data type definition enables the producer node 12 to express details on its production capabilities and constraints related to the data type, and enables the consumer node 16 to formulate data requests and subscription that correspond (better) to what can be delivered by the producer node 12.

In some embodiments, management node 14 is a DME Services Producer. The producer nodes 12 may be configured to register and/or update with the management node 14 (i.e., DME Services Producer) the data types producer nodes 12 can produce data for, the data type state, and its producer constraints, e.g., so that the management node 14 (i.e., DME services Producer) at any time can expose to consumer nodes 16 the current view of the system capabilities and/or constraints related to serving the consumer nodes 16 with data for the data types they request and subscribe. In these embodiments, management node 14 is described as the DME Services Producer. However, management node is not limited as such and may be any other entity, such as DME Producer and/or DME and/or DME function, etc.

The consumer nodes 16 can be notified when a data type dynamically is registered or deregistered. The consumer node 16 can request or subscribe data when the data type is available, e.g., so that system need not keep track on "needs" for data that cannot be provided by the system in the present state.

The consumer nodes 16 can be notified when state of a registered data type changes. The data type state may indicate if:
- The data type is now available for use (e.g., data jobs may be accepted, and data may be delivered);
- The data type is now available for use but currently busy (e.g., data jobs may be accepted, but data may be delivered when there is capacity);
- The data type is currently disabled and/or data production is currently inoperable for the data type, e.g. dependencies are not in place;
- The data type is locked or shutting down for administrative reasons. Consumer node 16 should consider deleting existing data jobs for the data type.

The consumer nodes 16 can be notified when the producers constraints related to a data type changes. The consumer nodes 16 can then consider creating or update data jobs, e.g., due to that data can now be delivered such as in a way that (better) meets the needs of a job and/or node.

If a data request or subscribe is rejected, the reject reason may correspond to the data type state being available for query and notification.

If a data job is idle or disabled, the reason may correspond to the data type state being available for query and notification.

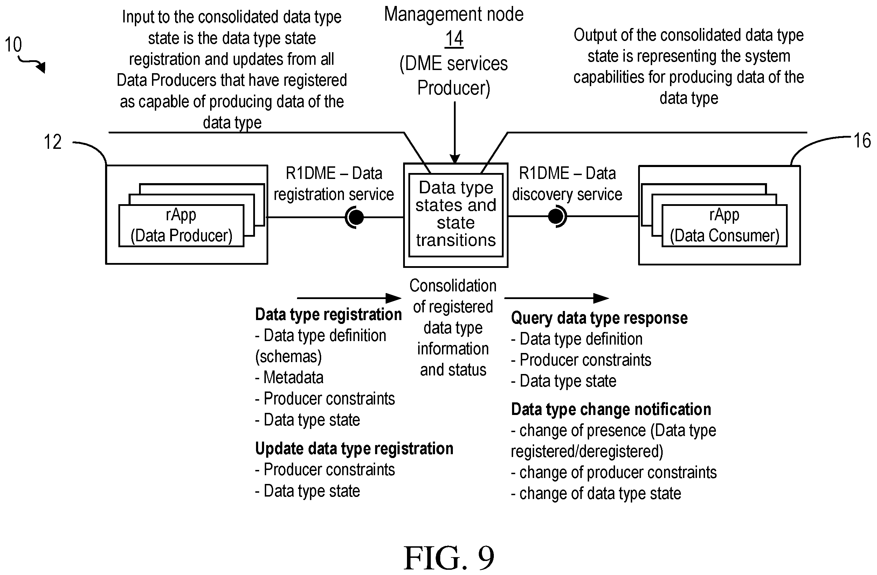

FIG. 9 shows an example system 10 overview including one or more producer nodes 12, a management node 14, and one or more consumer nodes 16. In some embodiments, the system 10 may be defined by an O-RAN non-real time (Non-RT) RAN intelligent controller (RIC) architecture and the Non-RT RIC framework, software application such as the rApps, a communication interface such as an R1 interface, and the R1 DME services and roles.

In some other embodiments, the R1 DME services may be produced by the management node 14 (DME services Producer) in the Non-RT RIC framework. The producer nodes 12 (e.g., Data Producers (rApps)) register their data type capabilities using the data registration service. More than one producer node 12 can register for the same data type. The consumer nodes 16 (e.g., Data Consumers (rApps)) may discover a consolidated view of registered data type capabilities using the data discovery service and/or use the data request and subscription service to request or subscribe to data for a data type. The consumer node 16 may not be aware of the which producer nodes 12 that would produce data of the data type if requested or subscribed.

In some embodiments, the management node 14 uses the input from the producer nodes 12 to provide a consolidated view to the consumer nodes 16 regarding the present system capabilities for producing data of the data type.

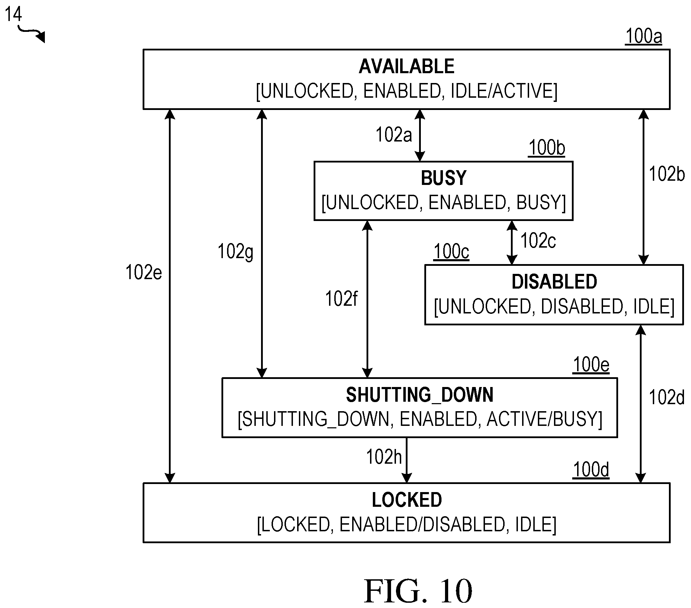

FIG. 10 shows an example state diagram which may be used to describe data types and configured, determined, operated, controlled, etc. by management node 14 (and/or management unit 24) as shown in FIG. 9. The state diagram may be based on a management model. In some embodiments, one more data type states 100 (and/or a corresponding short name) is used. For example, a short name for each of five data type states 100 (e.g., available, busy, disabled, shutting down, locked) may be used. However, the present disclosure is not limited as such, and other data type states 100 may be used. The data type states 100 may be associated with one or more state transitions 102. State transitions 102 may refer to one or more transitions between data type states 100. The state transitions 102 may be unidirectional (from one state to another) or multi-directional (from one state to another state and back to the state or transition to yet another state).

In some embodiments, the states may be defined as in Table 1 below.

**Table 1.- List of example data type states**

| **Data type state** | **Usage State** (e.g., X.731 state) [admin, operational, usage] | **Description** |
|---|---|---|
| AVAILABLE | [UNLOCKED, ENABLED, IDLE/ACTIVE] | Data type is available for use, it can be discovered, and data requests are accepted |
| BUSY | [UNLOCKED, ENABLED, BUSY] | Data type is available for use but there is no spare capacity, data requests are accepted but new jobs are idle until there is sufficient capacity |
| DISABLED | [UNLOCKED, DISABLED, IDLE] | Data type is not available for use, existing jobs are not enabled, and data requests are not accepted |
| SHUTTING_DOWN | [SHUTTING_DOWN, ENABLED, ACTIVE/BUSY] | Data type is not available for use, existing jobs are enabled but data requests are not accepted |
| LOCKED | [LOCKED, ENABLED/DISABLED, IDLE] | Data type is not available for use, existing jobs are idle and data requests are not accepted |

A data type may be associated with one or more usage states. A usage state may refer to the usage of the data type (or job, or resource, etc.). In some embodiments, usage state refers to an administrator state or an operational state associated with the data type. Further, usage state may refer to an X.371 state. An X.371 state may refer to a recommendation promulgated by the International Telecommunication Union (ITU). The states transitions 102 in the diagram may include one or more of the following:
- State transition 102a: When the capacity (e.g., of a producer node 12) is fully utilized, the data type state 100 becomes BUSY (e.g., transitions to BUSY). If capacity is available, the data type state 100 becomes AVAILABLE (e.g., transitions back to AVAILABLE). This can be caused by data jobs being created or deleted.
- State transition 102b: If production resources become inoperable, the data type state 100 becomes DISABLED. If the production resources becoming inoperable is resolved (i.e., resources become operable), the data type state 100 becomes AVAILABLE.
- State transition 102c: If production resources become inoperable, the data type state 100 becomes DISABLED. If the issue is resolved and resources become operable, the data type state 100 becomes BUSY in case capacity is not available to accept new data jobs.
- State transitions 102d, 102e: If production resources are locked, e.g., for administrative reasons, the data type state 100 changes to LOCKED. If production resources are unlocked for administrative reasons, the data type state 100 changes to DISABLED (e.g., case where resources are inoperable) or to ENABLED (e.g., case where resources are operable).
- State transitions 102f, 102g: If production resources are to be shut down for administrative reasons, the data type state 100 changes to SHUTTING_DOWN. If production resources are unlocked for administrative reasons, the data type state 100 changes to AVAILABLE (e.g., in cases capacity allows accepting new data jobs) or to BUSY (e.g., in cases capacity is not available to accept new data jobs).
- State transition 102h: If production resources are locked, e.g., for administrative reasons, the data type state 100 changes to LOCKED. If production resources are unlocked, e.g., for administrative reasons, the data type state 100 changes to AVAILABLE or DISABLED.

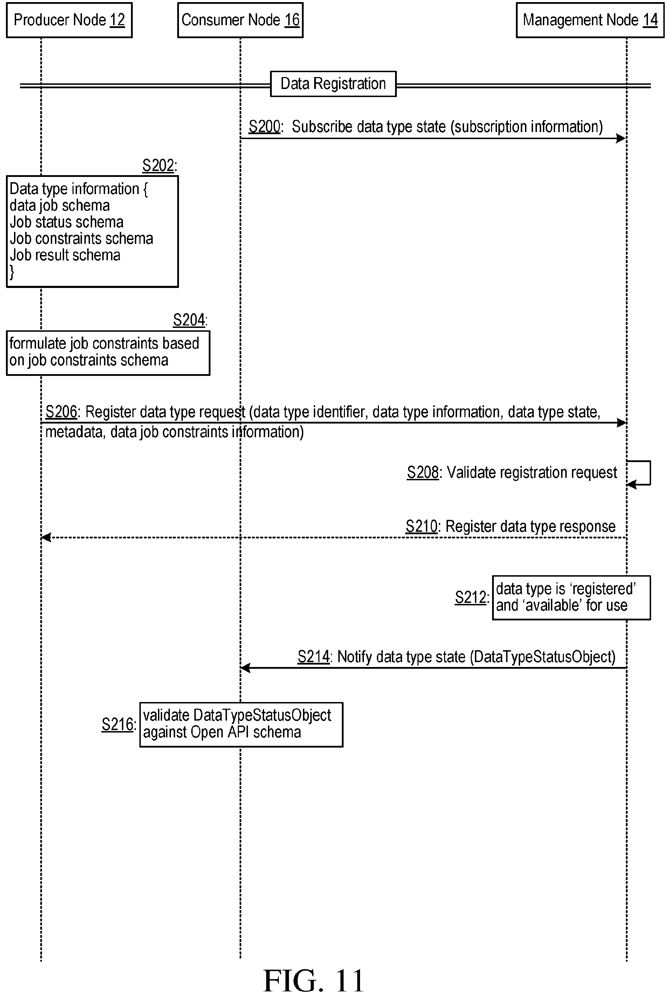

FIG. 11 shows a diagram of an example data registration process according to some embodiments of the present disclosure. The example management model allows for a state and/or status to be queried, subscribed, notified, and a registration updated. For example, a node may query data type state 100 and/or subscribe and/or notify data type state 100 and/or update a data type registration. Further, the payload of the register data type (i.e., registration of data type) and query data type (i.e., query of data type) response messages may be extended.

More specifically, at step S200 a consumer node 16 transmits a request to subscribe to data type state 100 (subscription information). At step S202 data type information is defined. At step S204, job constraints are formulated based on job constraints schema. At step S206, producer node 12 transmits a register data type request, which may include one or more of a data type identifier, data type information, a data type state 100, metadata, data job constraints information, etc.. At step S208, management node 14 validates the registration requests, and at step S210, transmits a register data type response. At step S212, the data type is registered by management node 14, and at step S214, management node 14 transmits a notification including the data type state 100 to consumer node 16. At step S216, consumer node 16 validates DataTypeStatusObject against open API schema. Any one of steps S200-S216 may be part of a data registration process.

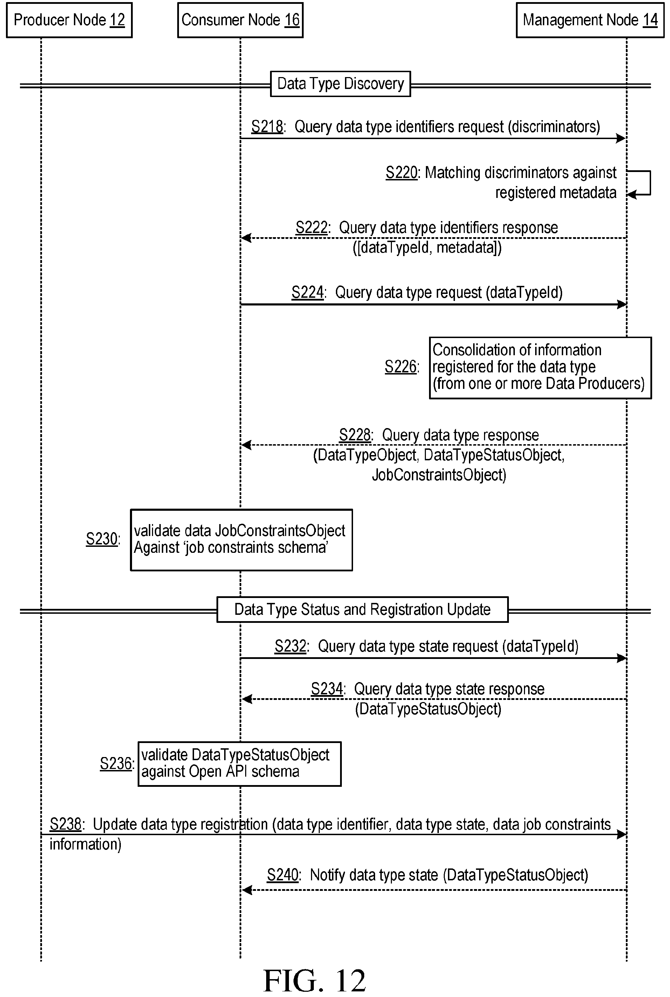

FIG. 12 shows a diagram associated with an example data type discovery process, and data type status and registration update process according to some embodiments of the present disclosure At step S218, consumer node 16 transmits a query data type identifiers request, which may include discriminators such as filters or filtering criteria associated with the data type identifiers and/or metadata. At step S220, management node 14 determines matching discriminators against registered metadata. At step S222, transmits a query data type identifiers response which may include the data type identifier and/or metadata. At step S224, management node 14 receives a query data type request from consumer node 16. The request may include data type identifiers. At step S226, management node 14 performs consolidation of information registered for the data type such as from one or more data producer nodes 12. At step S228, management node 14 transmits a query data type response, which may include one or more objects such as a DataType Object, a DataTypeStatusObject, a JobConstraintsObject, etc. At step S230, data may be validated, which may be associated with the JobsConstraintsObject. The validation may be against a schema such as "job constraints schema". Any one of steps S218-230 may be part of a data type discovery process.

At step S232, consumer node 16 transmits a query data type state request. At step S234, management node 14 transmits a query data type state response. At step S236, consumer node 16 may validate an object against a schema (e.g., DataTypeStatusObject against Open API schema). At step S238, producer node 12 may transmit a request to update a data type registration, and at step S240, management node 14 notifies consumer node 16 of a data type state 100, which may include a DataTypeStatusObject. In some embodiments, the term "status" may refer to a "state" such as a data type state 100.

The following is a nonlimiting list of example embodiments:
Embodiment A1. A producer node configured to communicate with at least one of a management node and a consumer node, the producer node configured to, and/or comprising a communication interface and/or comprising processing circuitry configured to:
   determine data type information based at least in part on a data type, the data type information comprising one or more data type states, the data type being associated with data that the producer node is configurable to produce to at least one of the management node and the consumer node; and
   register the data type information with the management node.
Embodiment A2. The producer node of Embodiment A1, wherein the data type information further includes at least one of:
   a data type definition;
   metadata related to the data type; and
   one or more producer constraints.
Embodiment A3. The producer node of any one of Embodiments A1 and A2, wherein the one or more data type states include available, busy, disabled, shutting down, and locked.
Embodiment A4. The producer node of any one of Embodiments A1-A3, wherein the producer node and/or processing circuitry is configured to at least one of:
   one of update and remove the registration of the data type information with the management node based at least on the one or more data type states; and
   cause transmission of a notification to the consumer node indicating at least one of the registration, the update, the removal of the registration of the data type information, and a data type information change.
Embodiment B1. A method implemented in a producer node configured to communicate with at least one of a management node and a consumer node, the method comprising:
   determining data type information based at least in part on a data type, the data type information comprising one or more data type states, the data type being associated with data that the producer node is configurable to produce to at least one of the management node and the consumer node; and
   registering the data type information with the management node.
Embodiment B2. The method of Embodiment B1, wherein the data type information further includes at least one of:
   a data type definition;
   metadata related to the data type; and
   one or more producer constraints.
Embodiment B3. The method of any one of Embodiments B1 and B2, wherein the one or more data type states include available, busy, disabled, shutting down, and locked.
Embodiment B4. The method of any one of Embodiments B1-B3, wherein the method further includes at least one of:
   one of updating and removing the registration of the data type information with the management node based at least on the one or more data type states; and
   causing transmission of a notification to the consumer node indicating at least one of the registration, the update, the removal of the registration of the data type information, and a data type information change.
Embodiment C1. A management node configured to communicate with at least one of a producer node and a consumer node, the management node configured to, and/or comprising a communication interface and/or processing circuitry configured to:
   determine data type information associated with a data type based on a received registration of the data type information, the data type information comprising one or more data type states, the data type being associated with data that the producer node is configurable to produce to at least one of the management node and the consumer node; and
   make the data type information available to the consumer node.
Embodiment C2. The management node of Embodiment C1, wherein the data type information further includes at least one of:
   a data type definition;
   metadata related to the data type; and
   one or more producer constraints.
Embodiment C3. The management node of any one of Embodiments C1 and C2, wherein the one or more data type states include available, busy, disabled, shutting down, and locked.
Embodiment C4. The management node of any one of Embodiments C1-C3, wherein the management node and/or processing circuitry is configured to at least one of:
   one of update and remove the registration of the data type information with the management node based at least on the one or more data type states; and
   cause transmission of a notification to the consumer node indicating at least one of the registration, the update, the removal of the registration of the data type information, and a data type information change.
Embodiment D1. A method implemented in a management node configured to communicate with at least one of a producer node and a consumer node, the method comprising:
   determining data type information associated with a data type based on a received registration of the data type information, the data type information comprising one or more data type states, the data type being associated with data that the producer node is configurable to produce to at least one of the management node and the consumer node; and
   making the data type information available to the consumer node.
Embodiment D2. The method of Embodiment D1, wherein the data type information further includes at least one of:
   a data type definition;
   metadata related to the data type; and
   one or more producer constraints.
Embodiment D3. The method of any one of Embodiments D1 and D2, wherein the one or more data type states include available, busy, disabled, shutting down, and locked.
Embodiment D4. The method of any one of Embodiments D1-D3, wherein the method further includes at least one of:
   one of updating and removing the registration of the data type information with the management node based at least on the one or more data type states; and
   causing transmission of a notification to the consumer node indicating at least one of the registration, the update, the removal of the registration of the data type information, and a data type information change.
Embodiment E1. A consumer node configured to communicate with at least one of a management node and a producer node, the consumer node configured to, and/or comprising a communication interface and/or processing circuitry configured to:
   obtain, from the management node, data type information associated with a data type, the data type information comprising one or more data type states, the data type being associated with data that the producer node is configurable to produce to at least one of the management node and the consumer node; and
   perform at least one action based on the obtained data type information.
Embodiment E2. The consumer node of Embodiment E1, wherein the data type information further includes at least one of:
   a data type definition;
   metadata related to the data type; and
   one or more producer constraints.
Embodiment E3. The consumer node of any one of Embodiments E1 and E2, wherein the one or more data type states include available, busy, disabled, shutting down, and locked.
Embodiment E4. The consumer node of any one of Embodiments E1-E3, wherein the management node and/or processing circuitry is configured to at least one of:
   receive a notification indicating at least one of the registration, the update, the removal of the registration of the data type information, and a data type information change; and
   perform the at least one of more actions based on the received notification.
Embodiment F1. A method in a consumer node configured to communicate with at least one of a management node and a producer node, the method comprising:
   obtaining, from the management node, data type information associated with a data type, the data type information comprising one or more data type states, the data type being associated with data that the producer node is configurable to produce to at least one of the management node and the consumer node; and
   performing at least one action based on the obtained data type information.
Embodiment F2. The method of Embodiment F1, wherein the data type information further includes at least one of:
   a data type definition;
   metadata related to the data type; and
   one or more producer constraints.
Embodiment F3. The method of any one of Embodiments F1 and F2, wherein the one or more data type states include available, busy, disabled, shutting down, and locked.
Embodiment F4. The method of any one of Embodiments F1-F3, wherein the method further includes at least one of:
   receiving a notification indicating at least one of the registration, the update, the removal of the registration of the data type information, and a data type information change; and
   performing the at least one of more actions based on the received notification.

Additional non-limiting examples and embodiments are provided as follows.

### DATA TYPE STATES A RESOURCE REPRESENTATION

### 1.3.1 Definitions

For the purposes of the present document, the terms and definitions given in 3GPP TR 21.905 and the following apply. A term defined in the present document takes precedence over the definition of the same term, if any, in 3GPP TR 21.905.

Non-RT RIC: O-RAN non-real-time RAN Intelligent Controller: a logical function in the SMO framework that enables non-real-time control and optimization of RAN elements and resources, AI/ML workflow including model training and updates, and policy-based guidance of applications/features in Near-RT RIC. The Non-RT RIC is comprised of the Non-RT RIC framework and Non-RT RIC applications (rApps).

Non-RT RIC framework: Functionality internal to the SMO framework that logically terminates the A1 interface and provides the R1services to rApps through the R1 interface.

rApp: Non-RT RIC application: an application designed to consume and/or produce R1 Services.

NOTE: rApps can leverage the functionality provided by the SMO and Non-RT RIC framework to deliver value added services related to intelligent RAN optimization and operation.

R1 Interface: Interface between rApps and Non-RT RIC framework via which R1 Services can be produced and consumed.

R1 Services: A collection of services including, but not limited to, service registration and discovery services, authentication and authorization services, AI/ML workflow services, and A1, O1 and O2 related services.

data type: the model on which a data jobs, data job results, and data job constraints is based.

data instance: the result of a data job.

### 3.2.2.x Registration and Discovery of data types

The following procedures are defined:
Register data type: A Data Producer service consumer uses this procedure to register as producer for a data type of which it can produce data instances. The information provided in the request includes the data type identifier, the data type schemas, metadata, producer constraints and data type status.

Update data type registration: A Data Producer service consumer uses this procedure to update its registration as producer for a data type. The information provided in the request may include producer constraints and/or data type status.

Deregister data type: A Data Producer service consumer can use this procedure to deregister as producer for a data type that it has previously registered for.

Discover data type: A Data Consumer service consumer uses this procedure to discover available data types. The information provided in the request may include discriminators based on registered metadata. The information provided in the response includes data type identifiers.

Query data type: A Data Consumer service consumer uses this procedure to query for information on data type. The information provided in the request includes the data type identifier. The information provided in the response includes the data type schemas, and consolidated information about registered producer constraints and data type status.

### 3.2.2.y Status of data types

The following procedures are defined:
Query data type change status: A Data Producer service consumer uses this procedure to query for data type status. The information provided in the request includes the data type identifier. The information provided in the response includes consolidated information about registered data type status.

Subscribe data type change: A Data Producer service consumer uses this procedure to subscribe to changes related to data types. The information provided in the request indicates if availability changes, producer constraints changes and/or data type status changes are subscribed to.

Notify data type change: The service producer can use this procedure to notify a subscribed service consumer about changes in data type availability, changes in consolidated producer constraints and/or changes in consolidated data type status.

### 5.2.3 Lifecycle aspects

### 5.2. 3.1 Registration of data source

Before the service producer can provide a certain data type over the interface, it needs to set-up the collection of input information from internal and/or external data sources, and set-up the functions that produce data instances. When set-up is complete, the data type can be discovered.

### 5.2. 3.2 Discovery of enrichment information

The service consumer discovers available data types. The service producer controls which data types are discoverable and accessible by a specific service consumer.

For a specific data type the service consumer can request a detailed description of the data type provided and how to formulate a request for delivery of data instances.

### 5.2.3.3 Lifecycle aspects of data types

The service producer is responsible for ensuring that the data types that are discoverable can be used for data jobs and delivery of data job results. The state of a data type represents the current capability to handle data jobs of the data type.

Based on the model described in Annex A, the state of a data type can be one of:
AVAILABLE;
BUSY;
DISABLED;
SHUTTING_DOWN; or
LOCKED.

When the state of the data type is AVAILABLE or BUSY, data job requests can be accepted.

When the state of the data type is DISABLED, SHUTTING_DOWN or LOCKED, data job requests cannot be accepted.

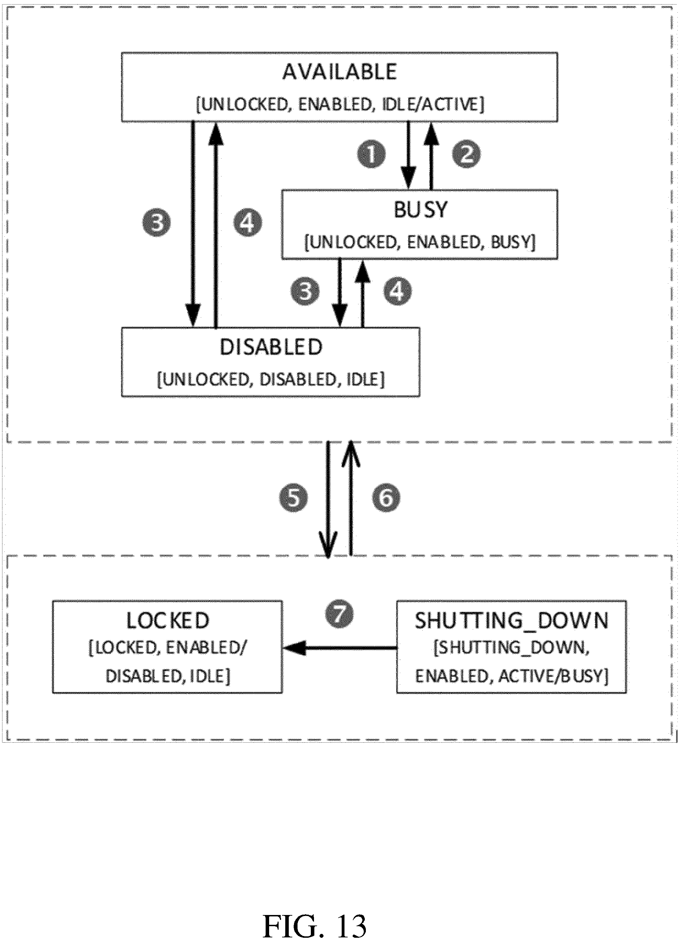

The data type states and transitions are illustrated in FIG. 13.

The state transitions in the diagram represent:
1. When the capacity is fully utilized, the data type state becomes BUSY.
2. If capacity is available, the data type state becomes AVAILABLE. This can be caused by data jobs being created or deleted.
3. If production resources get inoperable, the data type state becomes DISABLED.
4. If the issue is resolved and resources get operable, the data type state becomes AVAILABLE or BUSY in case capacity is not available.
5. If production resources are locked for administrative reasons, the data type state changes to LOCKED and if production resources are to be shut down for administrative reasons, the data type state changes to SHITTUNG_DOWN
6. If production resources are unlocked for administrative reasons, the data type state changes to DISABLED is case resources are inoperable or to ENABLED is case resources are operable. If production resources are unlocked for administrative reasons, the data type state changes to AVAILABLE in case in case capacity is available to accept new data jobs or to BUSY is case in case capacity is not available to accept new data jobs.
7. If production resources shut down for administrative reasons and all data jobs have become IDLE or been deleted, the data type state changes to LOCKED.

### 5.2.3.4 Request and delivery of data job result

Following the discovery that a data type is available, the request and delivery of data instances is done in two steps:
First the service consumer requests to get data job result for the data type by creating a data job that contains a description of the information that is requested and which delivery mechanism to use.

Then the service producer sets up the appropriate connection and delivers data instance according to the agreed details for the data job.

### 5.2.3.5 Lifecycle aspects of data jobs

The service consumer can initiate creation, update and deletion of data jobs. The data job is created when the service consumer needs data instances of a specific data type, and the data job is deleted when the service consumer no longer needs the data.

Based on the model described in Annex A, the state of a data job, also referred to as data job status, can be one of:
ENABLED;
PENDING; or
DISABLED.

When the state of a data job is ENABLED, data job results can be delivered.

When the state of a data job is PENDING or DISABLED, data job results cannot be delivered.

When the state of a data type is SHUTTING_DOWN, data job results can be delivered.

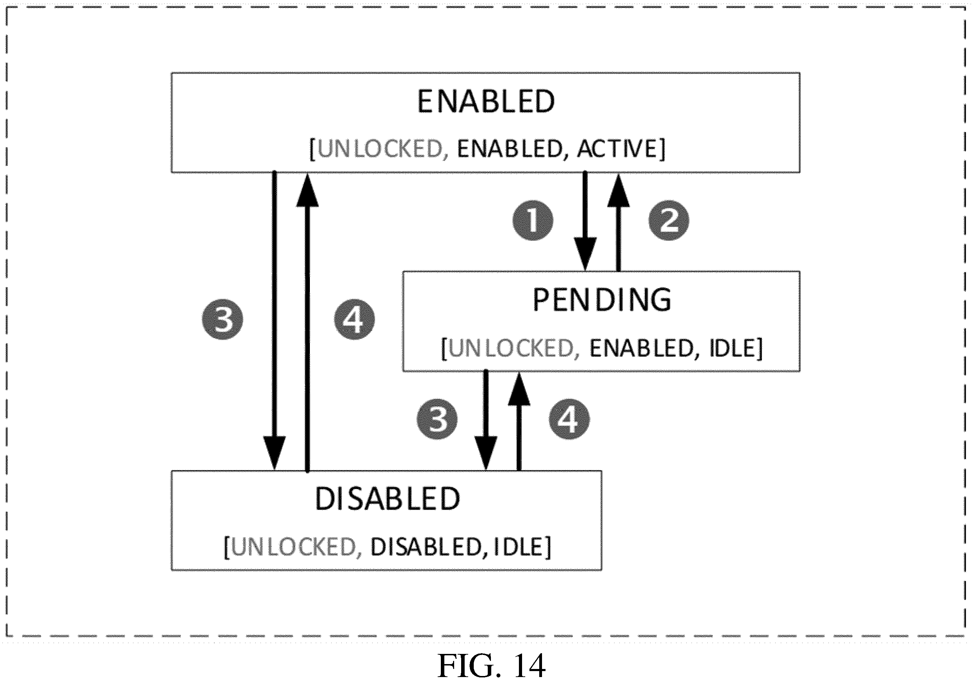

The data job states and transitions are illustrated in FIG. 14.

The state transitions in the diagram represent:
1. When the data type state becomes BUSY, the data job state may become PENDING.
2. When capacity is available for data job result production and delivery, the data job state becomes ENABLED.
3. If job production resources get inoperable, the data job state becomes DISABLED.
4. If the issue is resolved and resources get operable, the data job state becomes ENABLED or PENDING in case capacity is not available.

### 5.2.3.6 Lifecycle aspects of data job results

The service producer is responsible for the set-up of connections to the service consumer for the delivery of data job results according to the agreed data job. The delivery of the data job results is started when the data job is created and stopped when the data job is deleted.

The service consumer may evaluate the received data job results. If the received data results are not according to expectations, the service consumer can update the data job or delete it.

### ANNEX A (INFORMATIVE)

### LCM state machines

### A.1 Modelling of states for R1 interface

### A.1.1 General

This clause describes a model for management states related to data management and exposure that is based on the generic states of the model described in ITU X.731 [13]. The model refers to "Types" and "Jobs" where a Job is one resource that can be created based on a Type.

Note: In ITU X.731 [13] the resource is referred to as a User of the managed entity, in the model in the present specification, *'(new) job created'* corresponds to 'new user' and *'(last) job deleted'* correspond to '(last) user quit'.

The specific model for data management and exposure is described in A.2.

### A.1.2 Model for management of types

### A.1.2.1 Type operational state

Two operational states are defined: Type ENABLED and Type DISABLED.

In Type ENABLED, the Type is fully or partially operable. In Type DISABLED, the Type is totally inoperable.

Note: when a Type is inoperable, all existing Jobs of that Type are inoperable.

The events that trigger transitions between the Type operational states are *Type enable* and *Type disable.* These events are internal and are not caused by any signalling over the A1 interface. The state can be queried, and the state change can be notified over the A1 interface.

### A.1.2.2 Type usage state

Three usage states are defined: Type IDLE, Type ACTIVE and Type BUSY.

In Type IDLE, there is no Job created for the Type, or all existing Jobs are in Job IDLE (see clause A.1.3). In Type ACTIVE there are Jobs(s) for the Type, new Job can be created for the Type, and existing Job can be deleted for the Type. In Type BUSY there are Job(s) for the Type, no new Job can be created for the Type, but existing Job can be deleted for the Type.

Note: The Type BUSY state implies all capacity is being used for handling of the existing Job(s), hence no new Job can be handled. When capacity becomes available, e.g., due to that one or more Jobs are deleted, the state changes to Type ACTIVE.

The events that trigger transitions between the Type IDLE and Type ACTIVE states are *Job created* and *Last job deleted.* In addition to increase or decrease of capacity, the events that trigger transitions between the Type ACTIVE and Type BUSY states are *Job created* and *Job deleted.* In the Type ACTIVE state, the events *Job created* and *Job deleted* may not trigger a state transition. These events correspond to create and delete operations over the A1 interface.

Note: In addition to *Job create*/*delete,* also *Job update* can trigger transition between Type ACTIVE and Type IDLE

### A.1.2.3 Type administrative state

Three administrative states are defined: Type UNLOCKED, Type SHUTTING_DOWN and Type LOCKED.

In Type UNLOCKED, Jobs can be created for Type as governed by the Type operational state and the Type usage state. In Type SHUTTING_DOWN, no new Job can be created for the type and when the last Job is deleted the administrative state changes to Type LOCKED. In Type LOCKED, the usage state is Type IDLE (see clause A.1.2.2).

When no Job exists in Type LOCKED or Type UNLOCKED, the Type can be made unavailable for discovery and query over the A1 interface.

The events that trigger transitions between the Type UNLOCKED and Type SHUTTING_DOWN are *Shut down* and *Unlock type.* The events that trigger transitions between the Type UNLOCKED and Type LOCKED are *Lock type* and *Unlock type and Shut down* in case no Job exist. The transition between Type SHUTTING_DOWN and Type LOCKED can be triggered by the *Lock type* event and or by the *Last job deleted* event, and by the *Type disable, Last job disabled,* and *Last job locked* events. These events are internal and not caused by signalling over the A1 interface, except the *Last job deleted* and *Last job locked* events which corresponds to operations over the A1 interface. The state can be queried, and the state change can be notified over the A1 interface. Detection of that a Type has entered the Type SHUTTING_DOWN or LOCKED states is an indication that existing Jobs for that Type should be considered for deletion (over the A1 interface).

### A.1. 2.4 Type states dependencies

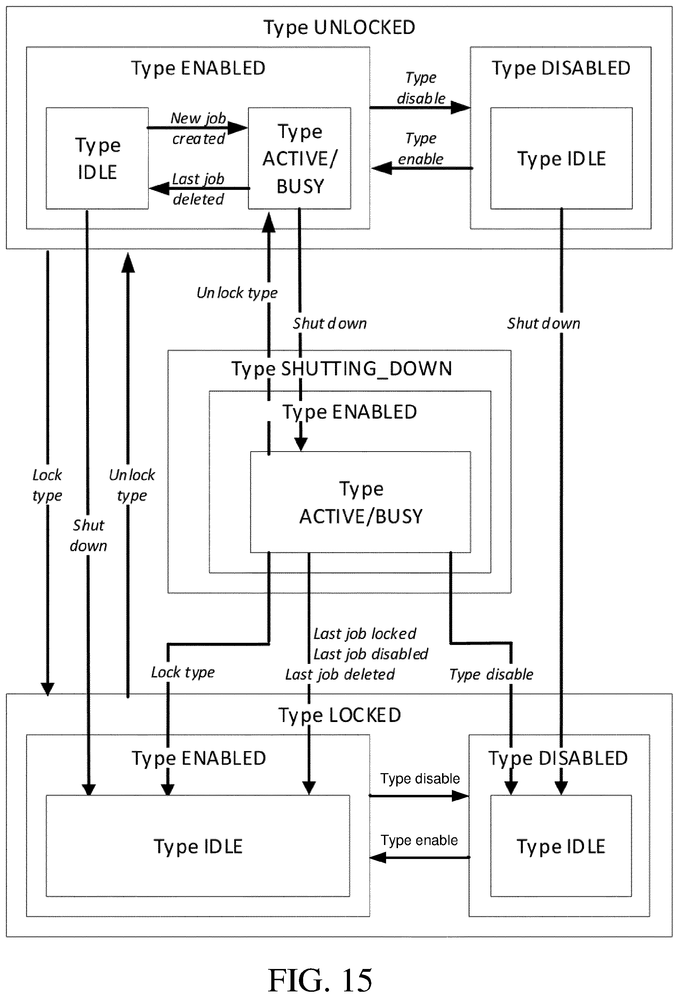

The states related to management of Types, and the events that can trigger transitions between them, are illustrated in FIG. 15.

### A.1.2.5 Type LCM aspects

When a new Type is made available, i.e., becomes discoverable and queryable over the A1 interface, the entry administrative state is either Type UNLOCKED or Type LOCKED. If it starts in Type LOCKED, it needs to be unlocked before it can be used. The *Unlock type* event is internal and not caused by signalling over the A1 interface.

When an existing Type is to be made unavailable the exit administrative state is Type LOCKED or Type UNLOCKED, and no Job can exist, or all Jobs are in Job IDLE. If there are existing Jobs in the Type UNLOCKED state, the Type can first be set into Type SHUTTING_DOWN where Jobs can be deleted before it enters Type LOCKED. In SHUTTING_DOWN, existing Jobs may remain ENABLED until deleted. The LOCKED state can also be entered by disabling the Type or all Jobs, or by locking the Type or all Jobs.

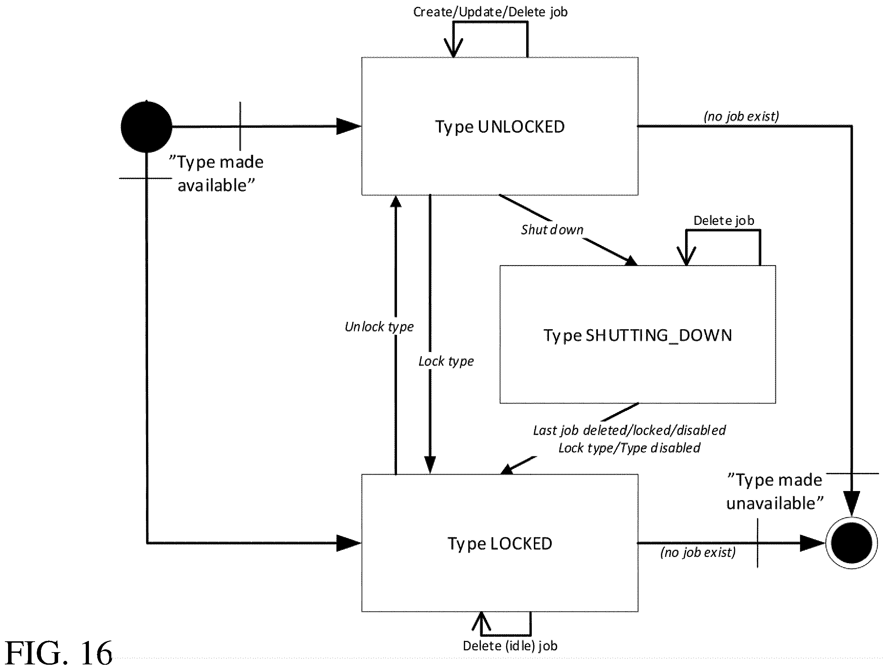

The Type LCM aspects are illustrated based on the administrative states in FIG. 16.

The Type LCM aspects based on the administrative states in FIG. 16 illustrates the Type states after the Type is made available until it is made unavailable including the main events.

### A.1.2.6 Type state notation

The following notation is used to express the Type state based on the model for management states:
typeState = [{administrative state}, {operational state}, {usage state}]

If one or two of the state values are not relevant, they can be placed with X. If two of three values are relevant, they can be separate by "/".
Example 1: A new Job can be created when typeState = [UNLOCKED, ENABLED, IDLE/ACTIVE].
Example 2: Job(s) are handled, and new Job can be created when typeState = [UNLOCKED, ENABLED, ACTIVE].
Example 3: No Job can be created when typeState = [UNLOCKED, DISABLED, X].

### A.1.3 Model for management of jobs based on types

### A.1.3.1 Job operational states

Two operational states are defined: Job ENABLED and Job DISABLED.

In Job ENABLED, the Job is fully or partially operable. In Job DISABLED, the Job is totally inoperable and cannot deliver any result.

The events that trigger transitions between the Job operational states are *Job enable* and *Job disable.* These events can be internal, e.g., related to needed resources or to the Type operational state, and are not caused by any signalling over the A1 interface. The state can be queried, and the state change can be notified over the A1 interface.

### A.1.3.2 Job administrative states

Two administrative states are defined: Job UNLOCKED and Job LOCKED.

In Job UNLOCKED, Job can deliver results as governed by the Job operational state. In Job LOCKED, Job does not deliver results.

The events that trigger transitions between the Job UNLOCKED and Job LOCKED are *Job lock* and *Job unlock.* These events would correspond to operations over the A1 interface.

### A.1.3.3 Job usage states

Two usage states are defined: Job IDLE and Job ACTIVE.

In Job IDLE, the Job does not deliver any result even if it is in Job ENABLED.

In Job ACTIVE, the Job delivers results. Job can be in Job ACTIVE only when it is in Job ENABLED.

There are no events defined that trigger transitions between the Job ACTIVE and Job IDLE, the entry into and exit from the Job usage states are governed by the Job administrative state.

### A.1.3.4 Job states dependencies

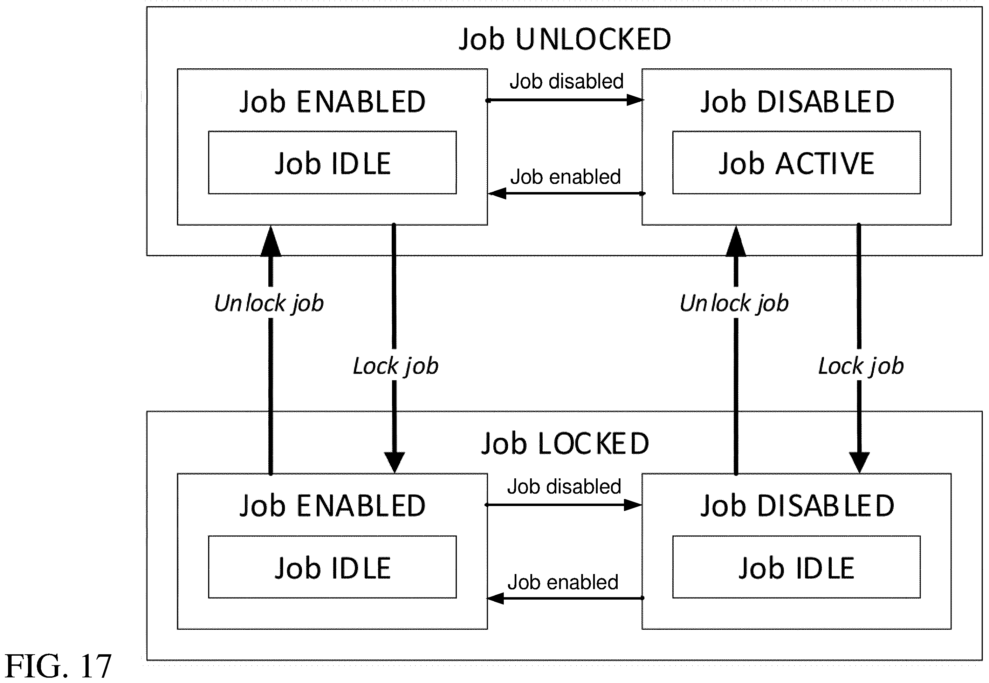

The states related to management of Jobs, and the events that can trigger transitions between them, are illustrated in FIG. 17.

### A.1.3.5 Job LCM aspects

When a new Job is created for the Type, the entry operational state is Job ENABLED.

When a Job is deleted, the exit operational state can be Job ENABLED or Job DISABLED.

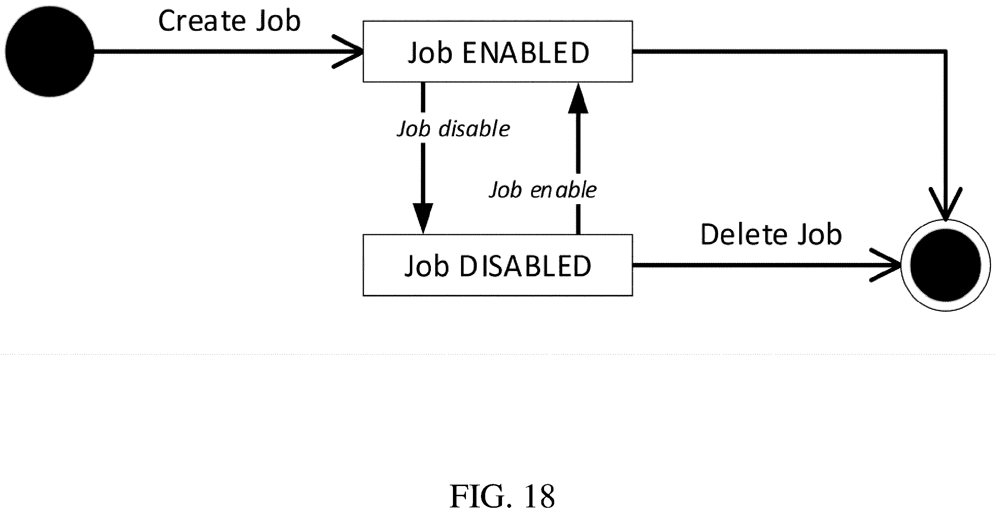

The Job LCM aspects are illustrated based on the operational states in FIG. 18.

### A.1.3.6 Job state notation

The following notation is used to express the Job state based on the model for management states:
jobState = [{ administrative state}, {operational state}, {usage state}]

If one or two of the state values are not relevant, they can be placed with X.
Example 1: a Job can deliver result when jobState = [UNLOCKED, ENABLED, ACTIVE].
Example 2: a Job does not deliver result when jobState = [LOCKED, X, IDLE].

### A.1.4 Dependencies between Job states and Type states

### A.1.4.1 General principles

The following principles apply for the model defined in this Annex:
- Type LOCKED implies Type IDLE;
- Type DISABLED implies all Job DISABLED;
- Type IDLE implies no job exist, or all Job IDLE;
- Type ACTIVE implies Job exist AND at least one Job ACTIVE;
- Job LOCKED implies Job IDLE;
- Job DISABLED implies Job IDLE;
- Job ENABLED implies Job ACTIVE in Job UNLOCKED.

### A.1.4.2 Dependencies between Job and Type operational states

The operational states of a Job for a Type are dependent on the operational state of the Type in the following way:
- If a Type is inoperable, all Jobs for that Type are also inoperable;
- A Job can be partially operable even if the Type is fully operable, and a Job can be inoperable even if the Type is fully or partially operable.

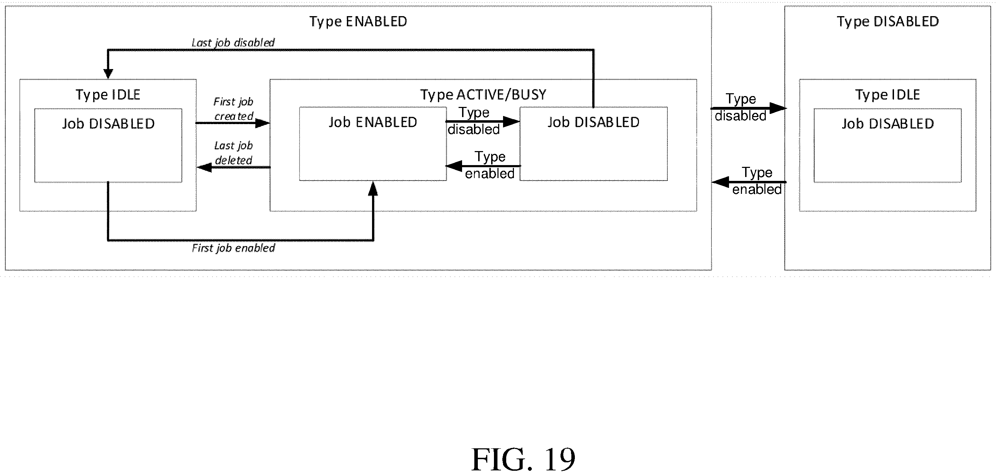

The dependencies between the operational states are illustrated in FIG. 19.

Note: A Job can be created for the Type only when typeState = [UNLOCKED, ENABLED, IDLE] or [UNLOCKED, ENABLED, ACTIVE].

More specifically, FIG. 19 shows dependencies between Type and Job operational states as applicable for Type UNLOCKED.

### A.1.4.3 Combined Job states and Type states

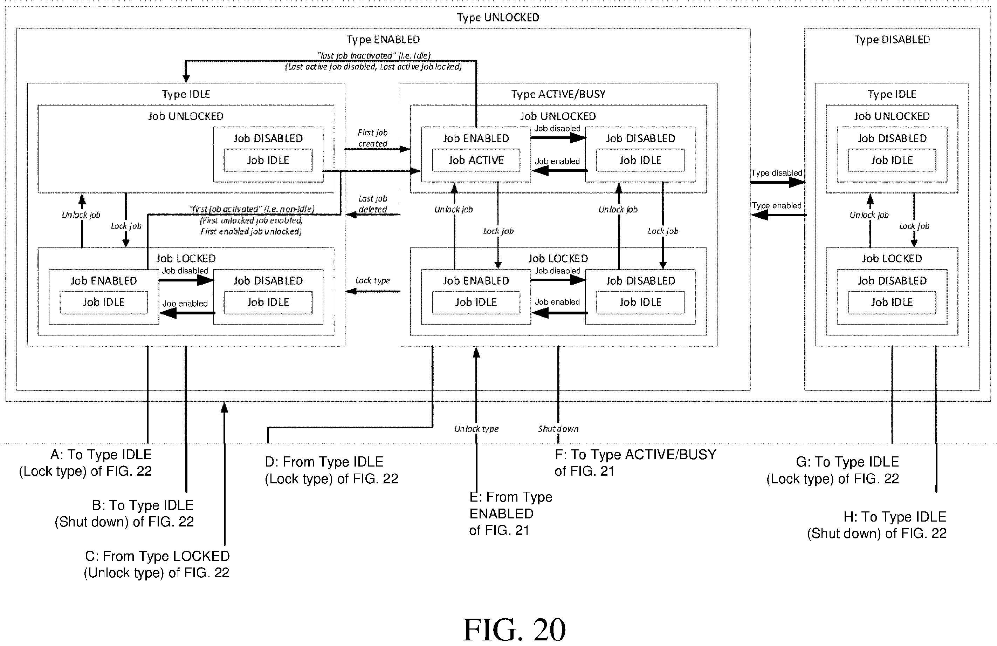

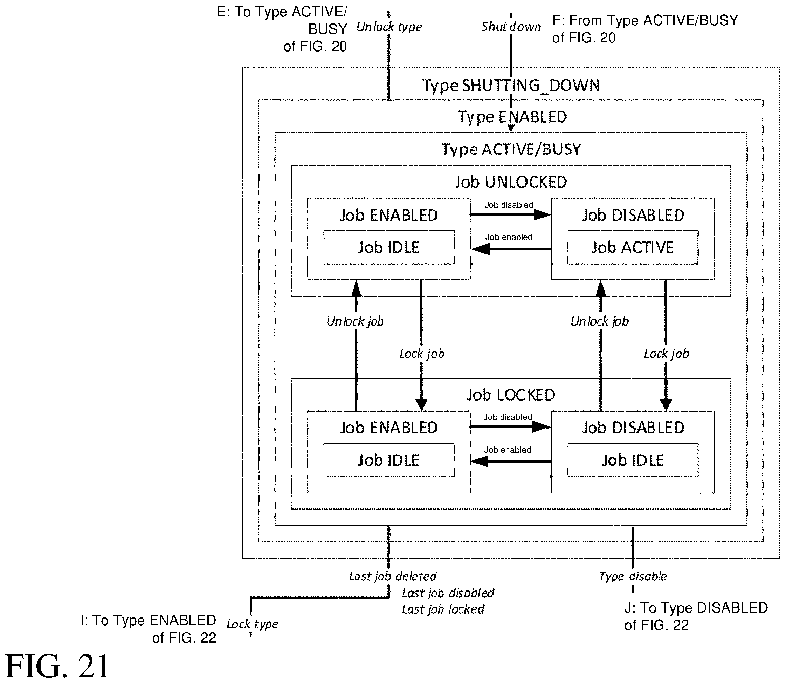

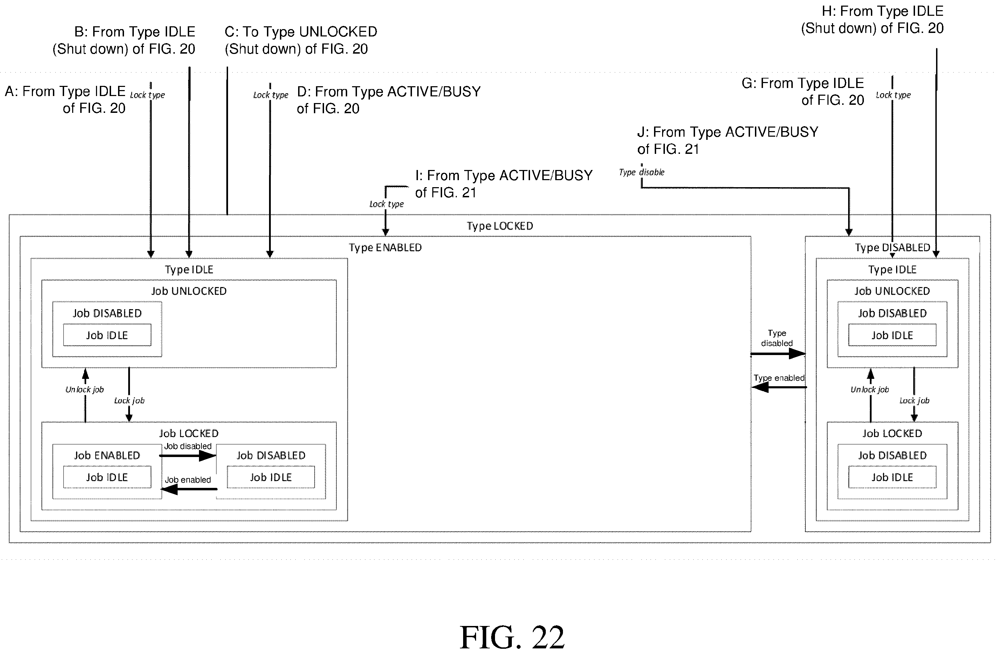

The combination of the model for Type management (FIG. 15) and the model for Job management (FIG. 17) is illustrated in FIGS. 20-22 after applying the principles and dependencies listed in clause A.1.4.1 and A.1.4.2.

### A.1.4.4 Type LCM aspects for Job management

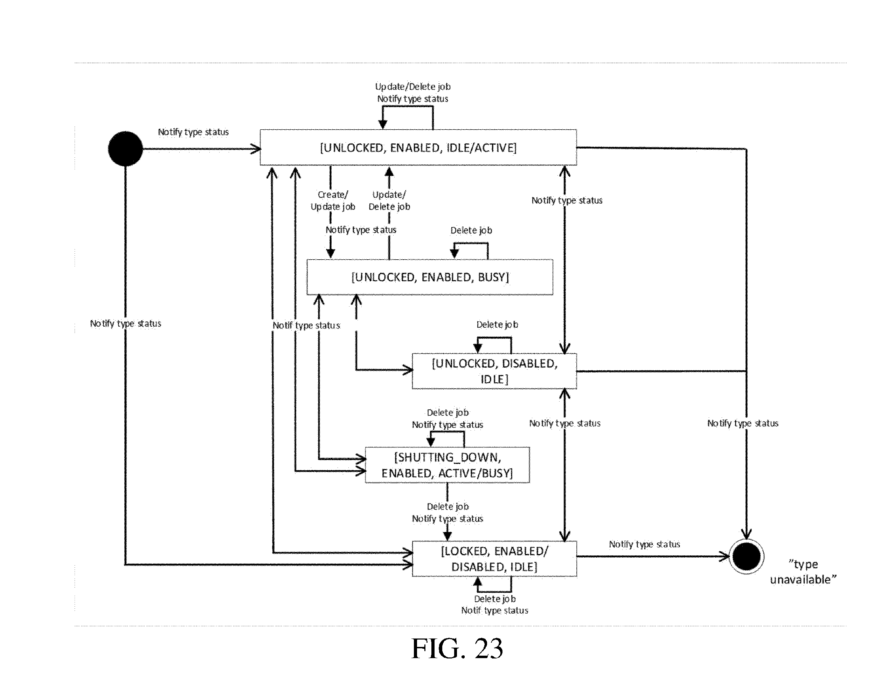

The responsibilities for Job LCM and Type LCM reside with different functionalities at either side of the A1 interface. Based on type status notifications when type state is changed, and the create/update/delete job operations that can cause a state change, the state diagram in FIG. 23 illustrates the view of type states and state transitions from the perspective of Job management.

In FIG. 23, type states are drawn in separate boxes only when they can have a noticeable impact on or due to Job management operations. Notify procedure name indicates a transition that is notified. The Create/Update/Delete job procedure names indicate where a type state transition (which is notified) can be caused by a successful outcome of the job management procedure.

### A.2 Data types for service models

### A.2.1 Data type states

Data types can be made available and unavailable over the interface by the service producer. When a data type is available it can be discovered and queried by the service consumer.

When data type is available, it has a state that can be queried and for which changes can be notified over the interface. The data type states for the interface are defined in table A.3.1-1 based on the Type states of the model described in clause A.1.

**Table A.2.1-1 Data type states**

| **Data type state** | **typeState definition** | **Applicability** |
|---|---|---|
| AVAILABLE | [UNLOCKED, ENABLED, IDLE], [UNLOCKED, ENABLED, ACTIVE] | Existing data jobs are enabled. |
| | | Data job creation, update and deletion can be accepted. |
| BUSY | [UNLOCKED, ENABLED, BUSY] | Existing data jobs are enabled |
| | | Data job creation and update are rejected due to lack of capacity for handling the data job. |
| | | Data job deletion can be accepted. |
| DISABLED | [UNLOCKED, DISABLED, IDLE] | Existing data jobs are not enabled. |
| | | Data job creation and update are rejected since Data jobs cannot be enabled. |
| | | Data job deletion can be accepted. |
| SHUTTING_DOWN | [SHUTTING DOWN, ENABLED, ACTIVE] [SHUTTING DOWN, ENABLED, BUSY] | Existing data jobs may be enabled. |
| | | Data job creation and update are rejected. |
| | | Data job deletion is accepted. |
| LOCKED | [LOCKED, ENABLED, IDLE] [LOCKED, DISABLED, IDLE] | No data job exists, or state of all existing data Jobs are Job IDLE. |
| | | Data job creation and update are rejected. |
| | | Data job deletion is accepted. |

### A.2.2 Data job states

Data jobs can be created and deleted over the interface by the service consumer. A data job is based on a data type. When the data type state is UNLOCKED and ENABLED, data jobs can be created based on that data type. When a data job exists, it can be discovered and queried by the service consumer.

When a data job exists, it has a state that can be queried and for which changes can be notified. The data job states for the interface are defined in table A.3.2-1 based on the Job states of the model described in clause A.1.

**Table A.2.2-1 Data job states**

| **Data job state** | **jobState definition** | **Applicability** |
|---|---|---|
| ENABLED | [X, ENABLED, ACTIVE/BUSY] | Data job is enabled and able to deliver data job result. |
| PENDING | [X, ENABLED, IDLE] | Data job is enabled but not able to deliver data job result. |
| DIASBLED | [X, DISABLED, IDLE] | Data job is disabled and not able to deliver data job result. |

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the scope of protection is limited only by the scope of the following claims.

## Claims

1. A method in a producer node (12) configured to communicate with a management node (14) and a consumer node (16), the method comprising:
determining (S112) a data type state (100) corresponding to a data type, the data type being associated with data that the producer node (12) is configurable to produce to the consumer node (16), the data type state (100) indicating a capability of the producer node (12) to produce the data of the data type; and
transmitting (S114) a first request to the management node (14), the first request requesting the management node (14) to register the data type and including the corresponding data type state (100);
wherein the producer node is an O-RAN rApp; and
wherein the consumer node is an O-RAN rApp; and
wherein the management node is an O-RAN DME -data management and exposure-services provider.

2. The method of Claim 1, wherein the first request further includes one or more of:
a data type identifier;
data type information associated with a data job schema, a job status schema, a job constraints schema, a job results schema;
metadata related to the data type; and
data job constraints information.

3. The method of any one of Claims 1 and 2, wherein the method further includes:
transmitting a second request, the second request requesting the management node (14) to update or remove the registration of the data type based on one or both of a state transition (102) of the data type state (100) and another data type state (100) of the data type.

4. A producer node (12) configured to communicate with a management node (14) and a consumer node (16), the producer node (12) being configured to perform the method of any of the claims 1-3

5. A method in a management node (14) configured to communicate with a producer node (12) and a consumer node (16), the method comprising:
registering (S116) a data type at the management node (14), the registration including a data type state (100) corresponding to the data type, the data type being associated with data that the producer node (12) is configurable to produce to the consumer node (16), the data type state (100) indicating a capability of the producer node (12) to produce the data of the data type; and
making (S118) at least the data type state (100) available to the consumer node (16),
wherein the producer node is an O-RAN rApp; and
wherein the consumer node is an O-RAN rApp; and
wherein the management node is an O-RAN DME -data management and exposure-services provider..

6. The method of Claim 5, wherein the method further includes:
receiving a first request from the producer node (12), the first request requesting the management node (14) to register the data type and including the data type state (100).

7. The method of Claims 6, wherein the first request further includes one or more of:
a data type identifier;
data type information associated with a data job schema, a job status schema, a job constraints schema, and a job results schema;
metadata related to the data type; and
data job constraints information.

8. A management node (14) configured to communicate with a producer node (12) and a consumer node (16), the management node (14) being configured to perform the method of any of the claims 5-7

9. A method implemented in a consumer node (16) configured to communicate with a producer node (12) and a management node (14), the method comprising:
obtaining (S120), from the management node (14), at least a data type state (100) corresponding to a data type, the data type being associated with data that the producer node (12) is configurable to produce to the consumer node (16), the data type state (100) indicating a capability of the producer node (12) to produce the data of the data type; and
performing (S122) one or more actions based at least on the obtained data type state (100),
wherein the producer node is an O-RAN rApp; and
wherein the consumer node is an O-RAN rApp; and
wherein the management node is an O-RAN DME -data management and exposure-services provider.

10. The method of Claim 9, wherein the data type is registered at the management node (14) and is further associated with one or more of:
a data type identifier;
data type information associated with a data job schema, a job status schema, a job constraints schema, and a job results schema;
metadata related to the data type; and
data job constraints information.

11. The method of any one of Claims 9 and 10, wherein the data type state (100) includes one of available (100a), busy (100b), disabled (100c), shutting down (100e), and locked (100d).

12. A consumer node (16) configured to communicate with a producer node (12) and a management node (14), the consumer node (16) being configured to perform the method of any of the claims 9-11.

13. A computer program, comprising instructions that, when executed in a producer node according claim 4 by processing circuitry, cause the processing circuitry to carry out the method according to any of claims 1-3.

14. A computer program, comprising instructions that, when executed in a management node according to claim 8 by processing circuitry, cause the processing circuitry to carry out the method according to any of claims 5-7.

15. A computer program, comprising instructions that, when executed in a consumer node according to claim 12 by processing circuitry, cause the processing circuitry to carry out the method according to any of claims 9-11.

## Patentansprüche

1. Verfahren in einem Erzeugerknoten (12), der zum Kommunizieren mit einem Verwaltungsknoten (14) und einem Verbraucherknoten (16) konfiguriert ist, wobei das Verfahren Folgendes umfasst:
Bestimmen (S112) eines Datentypzustands (100), der einem Datentyp entspricht, wobei der Datentyp mit Daten assoziiert ist, zu deren Erzeugung für den Verbraucherknoten (16) der Erzeugerknoten (12) konfigurierbar ist, wobei der Datentypzustand (100) eine Fähigkeit des Erzeugerknotens (12) zum Erzeugen der Daten des Datentyps angibt; und
Senden (S114) einer ersten Aufforderung an den Verwaltungsknoten (14), wobei die erste Aufforderung den Verwaltungsknoten (14) auffordert, den Datentyp zu registrieren und den entsprechenden Datentypzustand (100) einzubeziehen;
wobei der Erzeugerknoten eine O-RAN-rApp ist; und
wobei der Verbraucherknoten eine O-RAN-rApp ist; und
wobei der Verwaltungsknoten ein O-RAN-Datenverwaltungs- und -Darlegungsdienstanbieter, O-RAN-DME-Dienstanbieter, ist.

2. Verfahren nach Anspruch 1, wobei die erste Anforderung eines oder mehrere von Folgenden umfasst:
eine Datentypkennung;
Datentypinformationen, die mit einem Datenjobschema, einem Jobstatusschema, einem Jobbeschränkungsschema und einem Jobergebnisschema assoziiert sind;
Metadaten in Bezug auf den Datentyp; und
Datenjobbeschränkungsinformationen.

3. Verfahren nach einem der Ansprüche 1 und 2, wobei das Verfahren ferner Folgendes umfasst:
Senden einer zweiten Aufforderung, wobei die zweite Aufforderung den Verwaltungsknoten (14) auffordert, die Registrierung des Datentyps basierend auf einem von einem Zustandsübergang (102) des Datentypzustands (100) und einem anderen Datentypzustand (100) des Datentyps oder beiden zu aktualisieren oder zu entfernen.

4. Erzeugerknoten (12), der zum Kommunizieren mit einem Verwaltungsknoten (14) und einem Verbraucherknoten (16) konfiguriert ist, wobei der Erzeugerknoten (12) dazu konfiguriert ist, das Verfahren nach einem der Ansprüche 1-3 durchzuführen.

5. Verfahren in einem Verwaltungsknoten (14), der zum Kommunizieren mit einem Erzeugerknoten (12) und einem Verbraucherknoten (16) konfiguriert ist, wobei das Verfahren Folgendes umfasst:
Registrieren (S116) eines Datentyps am Verwaltungsknoten (14), wobei die Registrierung einen Datentypzustand (100) umfasst, der dem Datentyp entspricht, wobei der Datentyp mit Daten assoziiert ist, zu deren Erzeugung für den Verbraucherknoten (16) der Erzeugerknoten (12) konfigurierbar ist, wobei der Datentypzustand (100) eine Fähigkeit des Erzeugerknotens (12) zum Erzeugen der Daten des Datentyps angibt; und
Verfügbarmachen (S118) zumindest des Datentypzustands (100) für den Verbraucherknoten (16),
wobei der Erzeugerknoten eine O-RAN-rApp ist; und
wobei der Verbraucherknoten eine O-RAN-rApp ist; und
wobei der Verwaltungsknoten ein O-RAN-Datenverwaltungs- und -Darlegungsdienstanbieter, O-RAN-DME-Dienstanbieter, ist.

6. Verfahren nach Anspruch 5, wobei das Verfahren ferner Folgendes umfasst:
Empfangen einer ersten Aufforderung von dem Erzeugerknoten (12), wobei die erste Aufforderung den Verwaltungsknoten (14) auffordert, den Datentyp zu registrieren und den Datentypzustand (100) einzubeziehen.

7. Verfahren nach Anspruch 6, wobei die erste Aufforderung eines oder mehrere von Folgenden umfasst:
eine Datentypkennung;
Datentypinformationen, die mit einem Datenjobschema, einem Jobstatusschema, einem Jobbeschränkungsschema und einem Jobergebnisschema assoziiert sind;
Metadaten in Bezug auf den Datentyp; und
Datenjobbeschränkungsinformationen.

8. Verwaltungsknoten (14), der zum Kommunizieren mit einem Erzeugerknoten (12) und einem Verbraucherknoten (16) konfiguriert ist, wobei der Verwaltungsknoten (14) dazu konfiguriert ist, das Verfahren nach einem der Ansprüche 5-7 durchzuführen.

9. Verfahren, das in einem Verbraucherknoten (16) implementiert wird, der zum Kommunizieren mit einem Erzeugerknoten (12) und einem Verwaltungsknoten (14) konfiguriert ist, wobei das Verfahren Folgendes umfasst:
Erhalten (S120) mindestens eines Datentypzustands (100), der einem Datentyp entspricht, von dem Verwaltungsknoten (14), wobei der Datentyp mit Daten assoziiert ist, zu deren Erzeugung für den Verbraucherknoten (16) der Erzeugerknoten (12) konfigurierbar ist, wobei der Datentypzustand (100) eine Fähigkeit des Erzeugerknotens (12) zum Erzeugen der Daten des Datentyps angibt; und
Durchführen (S122) einer oder mehrerer Aktionen basierend auf dem erhaltenen Datentypzustand (100),
wobei der Erzeugerknoten eine O-RAN-rApp ist; und
wobei der Verbraucherknoten eine O-RAN-rApp ist, und
wobei der Verwaltungsknoten ein O-RAN-Datenverwaltungs- und -Darlegungsdienstanbieter, O-RAN-DME-Dienstanbieter, ist.

10. Verfahren nach Anspruch 9, wobei der Datentyp an dem Verwaltungsknoten (14) registriert wird und ferner mit einem oder mehreren von Folgenden assoziiert ist:
einer Datentypkennung;
Datentypinformationen, die mit einem Datenjobschema, einem Jobstatusschema, einem Jobbeschränkungsschema und einem Jobergebnisschema assoziiert sind;
Metadaten in Bezug auf den Datentyp; und
Datenjobbeschränkungsinformationen.

11. Verfahren nach einem der Ansprüche 9 und 10, wobei der Datentypzustand (100) einen von verfügbar (100a), belegt (100b), deaktiviert (100c), herunterfahren (100e) und gesperrt (100d) umfasst.

12. Verbraucherknoten (16), der zum Kommunizieren mit einem Erzeugerknoten (12) und einem Verwaltungsknoten (14) konfiguriert ist, wobei der Verbraucherknoten (16) dazu konfiguriert ist, das Verfahren nach einem der Ansprüche 9-11 durchzuführen.

13. Computerprogramm, umfassend Anweisungen, die bei Ausführung durch Verarbeitungsschaltungsanordnung in einem Erzeugerknoten nach Anspruch 4 die Verarbeitungsschaltungsanordnung zum Durchführen des Verfahrens nach einem der Ansprüche 1-3 veranlassen.

14. Computerprogramm, umfassend Anweisungen, die bei Ausführung durch Verarbeitungsschaltungsanordnung in einem Verwaltungsknoten nach Anspruch 8 die Verarbeitungsschaltungsanordnung zum Durchführen des Verfahrens nach einem der Ansprüche 5-7 veranlassen.

15. Computerprogramm, umfassend Anweisungen, die bei Ausführung durch Verarbeitungsschaltungsanordnung in einem Verbraucherknoten nach Anspruch 12 die Verarbeitungsschaltungsanordnung zum Durchführen des Verfahrens nach einem der Ansprüche 9-11 veranlassen.

## Revendications

1. Procédé dans un nœud producteur (12) configuré pour communiquer avec un nœud de gestion (14) et un nœud consommateur (16), le procédé comprenant :
la détermination (S112) d'un état de type de données (100) correspondant à un type de données, le type de données étant associé à des données que le nœud producteur (12) peut être configuré pour produire au nœud consommateur (16), l'état de type de données (100) indiquant une capacité du nœud producteur (12) à produire les données du type de données ; et
la transmission (S114) d'une première demande au nœud de gestion (14), la première demande demandant au nœud de gestion (14) d'enregistrer le type de données et incluant l'état de type de données (100) correspondant ;
dans lequel le nœud producteur est un O-RAN rApp ; et
dans lequel le nœud consommateur est un O-RAN rApp ; et
consommateur
dans lequel le nœud de gestion est un fournisseur de services d'exposition et de gestion de données O-RAN DME.

2. Procédé selon la revendication 1, dans lequel la première demande inclut en outre un ou plusieurs parmi :
un identifiant de type de données ;
des informations de type de données associées à un schéma de tâche de données, un schéma de statut de tâche, un schéma de contrainte de tâche, et un schéma de résultat de tâche ;
des métadonnées relatives au type de données ; et
des informations de contrainte de tâche de données.

3. Procédé selon l'une quelconque des revendications 1 et 2, dans lequel le procédé inclut en outre :
la transmission d'une deuxième demande, la deuxième demande demandant au nœud de gestion (14) de mettre à jour ou de supprimer l'enregistrement du type de données sur la base d'un ou des deux d'une transition d'état (102) de l'état de type de données (100) et d'un autre état de type de données (100) du type de données.

4. Nœud producteur (12) configuré pour communiquer avec un nœud de gestion (14) et un nœud consommateur (16), le nœud producteur (12) étant configuré pour réaliser le procédé selon l'une quelconque des revendications 1 à 3.

5. Procédé dans un nœud de gestion (14) configuré pour communiquer avec un nœud producteur (12) et un nœud consommateur (16), le procédé comprenant :
l'enregistrement (S116) d'un type de données au niveau du nœud de gestion (14), l'enregistrement incluant un état de type de données (100) correspondant au type de données, le type de données étant associé à des données que le nœud producteur (12) peut être configuré pour produire au nœud consommateur (16), l'état de type de données (100) indiquant une capacité du nœud producteur (12) à produire les données du type de données ; et
la mise (S118) d'au moins l'état de type de données (100) à disposition du nœud consommateur (16),
dans lequel le nœud producteur est un O-RAN rApp ; et
dans lequel le nœud consommateur est un O-RAN rApp ; et
consommateur
dans lequel le nœud de gestion est un fournisseur de services d'exposition et de gestion de données O-RAN DME.

6. Procédé selon la revendication 5, dans lequel le procédé inclut en outre :
la réception d'une première demande depuis le nœud producteur (12), la première demande demandant au nœud de gestion (14) d'enregistrer le type de données et incluant l'état de type de données (100)

7. Procédé selon la revendication 6, dans lequel la première demande inclut en outre un ou plusieurs parmi :
un identifiant de type de données ;
des informations de type de données associées à un schéma de tâche de données, un schéma de statut de tâche, un schéma de contrainte de tâche, et un schéma de résultat de tâche ;
des métadonnées relatives au type de données ; et
des informations de contrainte de tâche de données.

8. Nœud de gestion (14) configuré pour communiquer avec un nœud producteur (12) et un nœud consommateur (16), le nœud de gestion (14) étant configuré pour réaliser le procédé selon l'une quelconque des revendications 5 à 7.

9. Procédé mis en œuvre dans un nœud consommateur (16) configuré pour communiquer avec un nœud producteur (12) et un nœud de gestion (14), le procédé comprenant :
l'obtention (S120), depuis le nœud de gestion (14), d'au moins un état de type de données (100) correspondant à un type de données, le type de données étant associé à des données que le nœud producteur (12) peut être configuré pour produire au nœud consommateur (16), l'état de type de données (100) indiquant une capacité du nœud producteur (12) à produire les données du type de données ; et
la réalisation (S122) d'une ou plusieurs actions sur la base au moins de l'état de type de données (100) obtenu, dans lequel le nœud producteur est un O-RAN rApp ; et
dans lequel le nœud consommateur est un O-RAN rApp ; et
dans lequel le nœud de gestion est un fournisseur de services d'exposition et de gestion de données O-RAN DME.

10. Procédé selon la revendication 9, dans lequel le type de données est enregistré au niveau du nœud de gestion (14) et est en outre associé à un ou plusieurs parmi :
un identifiant de type de données ;
des informations de type de données associées à un schéma de tâche de données, un schéma de statut de tâche, un schéma de contrainte de tâche, et un schéma de résultat de tâche ;
des métadonnées relatives au type de données ; et
des informations de contrainte de tâche de données.

11. Procédé selon l'une quelconque des revendications 9 et 10, dans lequel l'état de type de données (100) inclut l'un parmi disponible (100a), occupé (100b), désactivé (100c), en cours d'arrêt (100e), et verrouillé (100d).

12. Nœud consommateur (16) configuré pour communiquer avec nœud producteur (12) et un nœud de gestion (14), le nœud consommateur (16) étant configuré pour réaliser le procédé selon l'une quelconque des revendications 9 à 11.

13. Programme informatique comprenant des instructions qui, lorsqu'elles sont exécutées dans un nœud producteur selon la revendication 4 par une circuiterie de traitement, amènent la circuiterie de traitement à réaliser le procédé selon l'une quelconque des revendications 1 à 3.

14. Programme informatique comprenant des instructions qui, lorsqu'elles sont exécutées dans un nœud de gestion selon la revendication 8 par une circuiterie de traitement, amènent la circuiterie de traitement à réaliser le procédé selon l'une quelconque des revendications 5 à 7.

15. Programme informatique comprenant des instructions qui, lorsqu'elles sont exécutées dans un nœud consommateur selon la revendication 12 par une circuiterie de traitement, amènent la circuiterie de traitement à réaliser le procédé selon l'une quelconque des revendications 9 à 11.
